# EUROPEAN PATENT APPLICATION

(11) **EP 3 171 233 A1**
(43) Date of publication of application: **24.05.2017**
(21) Application number: 15822111.9
(22) Date of filing: 01.04.2015
(51) Int. Cl.: G05B 11/01

(54) **HOME APPLIANCE, CONTROLLER, HOME APPLIANCE CONTROL SYSTEM USING CONTROLLER, METHOD FOR CONTROLLING HOME APPLIANCE, AND COMPUTER-READABLE RECORDING MEDIUM IN WHICH METHOD FOR CONTROLLING HOME APPLIANCE IS RECORDED**

(30) Priority: 18.07.2014 KR 20140090948
(71) Applicant: Samsung Electronics Co., Ltd., Suwon-si, Gyeonggi-do 443-742 (KR)
(72) Inventor: YANG, Hee Kyung, Suwon-si Gyeonggi-do 443-390 (KR); HAN, Baik Hee, Yongin-si Gyeonggi-do 446-746 (KR); KANG, Hee Jun, Yongin-si Gyeonggi-do 446-592 (KR); KIM, Jung Yeob, Gwangju 506-779 (KR)
(74) Representative: Gulde & Partner
(86) International application number: PCT/KR2015/003268
(87) International publication number: WO 2016/010231

(57) **Abstract**

The present invention relates to a home appliance, a controller, a home appliance control system using the controller, a method for controlling the home appliance, and a computer-readable recording medium in which the method for controlling the home appliance is recorded, wherein the home appliance may comprise: at least one controller mounting unit on which a controller is selectively mounted ; and a processing unit connected to be communicable with the controller so as to receive a control signal generated according to an operation of the controller when the controller is mounted on the controller mounting unit.

## Description

### [Technical Field]

Embodiments of the present invention relate to a home appliance, a controller, a system for controlling the home appliance, a method of controlling the home appliance, and a readable storage medium using a computer which stores the method of controlling the home appliance.

### [Background Art]

Home appliances may be used in the sense as encompassing various types of electronic products that are used in-house. For example, such home appliances may include refrigerators, washing machines, televisions, radio devices, audio devices, vacuum cleaners, air conditioners, home computers, laptops, etc. However, the type of home appliances is not limited thereto, and the various types of electronic products that are used in-house may be examples of the home appliances. Control devices which perform control of various operations necessary for the home appliances may be embedded in the home appliances. For example, the control device may include a micro control unit (MCU). The MCU refers to a control device in which multiple modules such as a central processing unit (CPU), volatile or non-volatile storage devices, and one or more ports are implemented in one or more chips. The MCU may perform various operations to generate control signals, and transmit the generated control signals to each part of the home appliance to control overall operations of the home appliance. Recently, smart home appliances are being used. The smart home appliance refers to a home appliance in which various application programs may be installed and considerable functions thereof may be changed or may expand through the installed various application programs.

### [Disclosure]

### [Technical Problem]

It is an aspect of the present invention to provide a home appliance capable of being controlled easily by a user, a controller capable of being attached to the home appliance, a system for controlling the home appliance using the controller, and a method of controlling the home appliance using the controller.

Further, it is another aspect of the present invention to provide a home appliance capable of improving and increasing convenience of a user, a controller capable of being used for general purposes in different home appliances, a system for controlling the home appliance using the controller, and a method of controlling the home appliance using the controller.

Additional aspects of the invention will be set forth in part in the description which follows and, in part, will be obvious from the description, or may be learned by practice of the invention.

### [Technical Solution]

A home appliance, a controller, a system for controlling the home appliance, a method of controlling the home appliance, and a readable storage medium using a computer which stores the method of controlling the home appliance are provided in order to solve the above problems.

In accordance with one aspect of the present invention, a home appliance includes at least one controller mounting part on which a controller is selectively mounted, and a processor, which is connected to the controller to be communicated and receives a control signal generated according to manipulation of the controller, when the controller is mounted on the controller mounting part.

The processor may receive a mount signal from the controller when the controller is mounted on the controller mounting part.

The processor may transmit identification information about the home appliance to the controller and receive authentication information from the controller when the controller is mounted on the controller mounting part.

The identification information about the home appliance may include at least one of a type of the home appliance, an identification number of the home appliance, a set target controllable in the home appliance, and information about an operating state of the home appliance.

The home appliance may further include a communication part which communicates with the controller using a wired communication method or a wireless communication method.

The communication part may perform communication with the controller using a wireless communication method including at least one of BluetoothTM, near field communication (NFC), ZigBeeTM, Wireless-Fidelity (Wi-Fi), Infrared Data Association (IrDA), HomeRF, and ultra wide band (UBW) communication.

The home appliance may further include a driving part which operates according to a driving signal of the processor and transmits a feedback signal according to performance of the operation to the processor.

The processor may determine a current state of the driving part based on the feedback signal, and transmit driving state information about a current driving state of the driving part to the controller.

The home appliance may further include a plurality of driving parts which perform the same function and a plurality of controller mounting parts corresponding to the plurality of driving parts, and the processor may generate a driving signal related to a first driving part corresponding to a first controller mounting part on which the controller is mounted among the plurality of controller mounting parts and transmit a control signal to the first driving part.

The processor may receive adjustment command to adjust a set value of a controllable set target of the home appliance according to manipulation of the controller.

The set value of the controllable set target of the home appliance may include at least one of a temperature, humidity, an amount of wind, and a driving time.

The controller mounting part and the controller may be coupled by magnetic force.

The controller mounting part may include an insertion groove into which the controller is inserted.

The controller mounting part may include a contact terminal which is in contact with the controller and receives an electrical signal generated in the controller.

The controller mounting part may be formed in a cylindrical shape, and the contact terminal may be disposed on an inner peripheral surface of the cylindrical-shaped controller mounting part.

The contact terminal may include a power source terminal which supplies a power source to the controller and a communication terminal which exchanges a signal with the controller.

The controller mounting part may be formed in a circular shape.

The processor may convert failure information generated in the home appliance into an error signal and transmit the error signal to the controller.

The home appliance may further include a user interface part which receives a control command of a user, and may be controlled through both the user interface part and the controller when the controller is mounted.

In accordance with another aspect of the present invention, a home appliance control system includes a controller including a manipulating part and a display and a home appliance on which the controller is selectively mounted and connected to the controller to be communicated when the controller is mounted, and the controller transmits a control signal generated according to manipulating of the manipulating part to the home appliance, and the home appliance transmits state information in which the home appliance operates to the controller, and the state information is displayed on the display.

The home appliance may transmit identification information of the home appliance to the controller, the controller may authenticate at least one home appliance based on the identification information, and the home appliance may be in a controllable state by the controller.

The controller may transmit identification information of the controller to the home appliance, and the home appliance may authenticate the controller based on the identification information, and the home appliance may be in a controllable state by the controller.

In accordance with still another aspect of the present invention, a controller includes a coupling part mounted on a part of a controlled device, a display part which displays state information of the controlled device, a manipulating part which receives a control command for controlling the controlled device, and a communication part which communicates with the controlled device, and a control signal corresponding to manipulation of the manipulating part is transmitted to the controlled device through the communication part when the coupling part is mounted on the part of the controlled device.

The manipulating part may include at least one of an operating wheel, a jog shuttle, a manipulating button, a touch screen, and a touch pad rotatable in at least one direction.

The coupling part may include at least one of an adsorber attached on an outer surface of a home appliance using a magnet and pressure of the air, an insertion projection inserted into an insertion groove of the home appliance, and a first terminal, which is coupled to a second terminal provided in the home appliance and outputs an electrical signal.

In accordance with yet another aspect of the present invention, a method of controlling a home appliance includes coupling a controller having a manipulating part to a part of a home appliance, connecting the home appliance to the controller to be communicated, and generating a control signal by the controller according to manipulation of the manipulating part of the controller and transmitting the control signal to the home appliance.

The connecting of the home appliance to the controller to be communicated may include transmitting a notification signal to notify the coupling of the controller from the controller to the home appliance.

The connecting of the home appliance to the controller to be communicated may include transmitting identification information of the home appliance to the controller by the home appliance, performing authentication of the home appliance in the controller based on the identification information of the home appliance, and being in a state in which the home appliance is controlled by the controller when the authentication of the home appliance is succeeded.

The connecting of the home appliance to the controller to be communicated may include transmitting identification information of the controller to the home appliance by the controller, performing authentication of the controller based on the identification information of the controller, and being in a state in which the home appliance is controlled by the controller when the authentication of the controller is succeeded.

The connecting of the home appliance to the controller to be communicated may include connecting the controller to at least one home appliance in a wired communication method or a wireless communication method.

The method of controlling the home appliance may further include displaying state information of the home appliance on which the controller is mounted by the controller.

The method of controlling the home appliance may further include manipulating the manipulating part of the controller, and receiving an adjustment command of a set value of a controllable set target of the home appliance.

The method of controlling the home appliance may further include manipulating the manipulating part of the controller, and changing a controllable set target of the home appliance.

The method of controlling the home appliance may further include transmitting information about the home appliance from the home appliance to the controller.

In accordance with yet another aspect of the present invention, a readable storage medium using a computer which stores a program for performing a method of controlling a controlled device is provided. The method of controlling the controlled device includes coupling a controller to the controlled device, connecting the controlled device to the controller to be communicated, manipulating the controller, and operating the controlled device according to the manipulation of the controller.

In accordance with yet another aspect of the present invention, a home appliance includes a plurality of reference points, a plurality of driving parts corresponding to each of the plurality of reference points, and a processor which determines distances between the plurality of reference points and the controller, selects at least one driving part of the plurality of driving parts according to the determined distances, and generates a control signal related to the selected driving part according to manipulation of the controller.

In accordance with yet another aspect of the present invention, a controller includes a coupling part which communicates with a home appliance including a plurality of driving parts, a display part which displays information about the home appliance attached through the coupling part, at least one manipulating part which receives a control command for controlling the home appliance, and a processor which determines distances from a plurality of reference points provided in the home appliance, selects at least one driving part of the plurality of driving parts according to the determined distances, and generates a control signal related to the selected driving part according to manipulation of the manipulating part.

In accordance with yet another aspect of the present invention, an electric range which is an example of a home appliance includes a cooktop which generates heat, a controller mounting part on which a controller is mounted, and a processor connected to the controller to be communicated, which receives a control signal generated according to manipulation of the controller, and generates a driving signal for controlling the cooktop according to the received control signal when the controller is mounted on the controller mounting part.

The processor may generate a driving signal related to the cooktop corresponding to the controller mounting part on which the controller is mounted.

The processor may receive a mount signal from the controller, transmit identification information to the controller, and receive authentication information from the controller when the controller is mounted on the controller mounting part.

The electric range may further include a communication part corresponding to the controller mounting part, and the processor may determine the cooktop to be controlled according to a distance between the communication part and the controller.

The driving signal may include a temperature adjustment signal of the cooktop.

In accordance with yet another aspect of the present invention, an air conditioner includes a controller mounting part on which a controller is mounted, an air conditioning unit which cools air and performs an operation for discharging the cooled air to the outside, and a processor connected to the controller to be communicated, which receives a control signal generated according to manipulation of the controller and generates a driving signal for controlling the air conditioning unit according to the received control signal when the controller is mounted on the controller mounting part.

The control signal may include at least one of a cooling temperature, an operating time, an air discharge direction, intensity of wind, an operation reservation time, and an operating mode.

The air conditioner may further include an external housing in which the controller mounting part is provided.

The processor may receive a mount signal from the controller, transmit identification information to the controller, and receive authentication information from the controller when the controller is mounted on the controller mounting part.

### [Advantageous Effects]

As is apparent from the above description, the user can easily and conveniently control various home appliances through the above-described home appliance, controller, home appliance control system using the controller, and method of controlling the home appliance using the controller.

According to the above-described home appliance, controller, home appliance control system using the controller, and method of controlling the home appliance using the controller, one common controller which can control a plurality of home appliances at different times can be provided.

According to the above-described home appliance, controller, home appliance control system using the controller, and method of controlling the home appliance using the controller, effects that the user can intuitively and conveniently control the home appliance, ease of operation can be increased, and the user's convenience can be improved, can be obtained.

According to the above-described home appliance, controller, home appliance control system using the controller, and method of controlling the home appliance using the controller, the user can intuitively control different home appliances using a controller of one home appliance, and thus ease and speed of operation of the home appliance by the user can be improved.

Further, according to the above-described home appliance, controller, home appliance control system using the controller, and method of controlling the home appliance using the controller, since the controller can automatically detect and be connected to different home appliances, the user can simply and easily control the different home appliances using one controller without having to perform a complicated network configuration process such as a Wi-Fi setup procedure.

### [Description of Drawings]

FIG. 1 is a schematic block diagram illustrating one embodiment of a home appliance and a controller;
FIG. 2 is a diagram for describing one embodiment of a home appliance control system including a home appliance and a controller;
FIG. 3 is a perspective view illustrating a first embodiment of a controller;
FIG. 4 is a plan view illustrating a first embodiment of a controller;
FIG. 5 is a bottom view illustrating a first embodiment of a controller;
FIG. 6 is a block diagram illustrating a first embodiment of a controller;
FIG. 7 is a diagram for describing a first embodiment of a first manipulating part of a controller;
FIG. 8 is a diagram for describing a second embodiment of a first manipulating part of a controller;
FIG. 9 is a perspective view illustrating a first embodiment of a second manipulating part of a controller;
FIG. 10 is a cross-sectional view illustrating a first embodiment of a second manipulating part of a controller;
FIG. 11 is a perspective view illustrating a second embodiment of a second manipulating part of a controller;
FIG. 12 is a cross-sectional view illustrating a second embodiment of a second manipulating part of a controller;
FIG. 13 is a perspective view illustrating a third embodiment of a second manipulating part of a controller;
FIG. 14 is a perspective view illustrating one embodiment of a third manipulating part of a controller;
FIG. 15 is a diagram illustrating a first embodiment of a coupling of a controller and a home appliance;
FIG. 16 is a diagram illustrating a second embodiment of a coupling of a controller and a home appliance;
FIG. 17 is a cross-sectional view illustrating a controller which is possible to be coupled in accordance with a second embodiment of the present invention;
FIG. 18 is a diagram illustrating a third embodiment of a coupling of a controller mounting part and a controller in a home appliance;
FIG. 19 is a diagram illustrating a fourth embodiment of a coupling of a controller mounting part and a controller in a home appliance;
FIG. 20 is a bottom view illustrating a controller which is possible to be coupled in accordance with a fourth embodiment of the present invention;
FIG. 21 is a diagram illustrating a fifth embodiment of a coupling of a controller and a home appliance;
FIG. 22 is a block diagram illustrating a first embodiment of a home appliance;
FIG. 23 is a diagram illustrating an air conditioner as a first example of a first embodiment of a home appliance;
FIG. 24 is a diagram illustrating an electric range as a second example of a first embodiment of a home appliance;
FIG. 25 is a schematic flowchart illustrating a method of controlling a home appliance;
FIGS. 26A and 26B are flowcharts illustrating one embodiment of a method of controlling a home appliance through a controller;
FIGS. 27A to 27E are diagrams illustrating examples of a method of using a home appliance control system;
FIGS. 28A to 28C are diagrams illustrating examples of a method of using a home appliance control system;
FIG. 29 is a block diagram illustrating a second embodiment of a configuration of a controller and a home appliance;
FIG. 30 is a plan view illustrating an electric range according to a second embodiment of a controller;
FIG. 31 is a graph for describing a second embodiment of a controller; and
FIG. 32 is a flowchart illustrating a second embodiment of a method of controlling a home appliance through a controller.

### [Modes of the Invention]

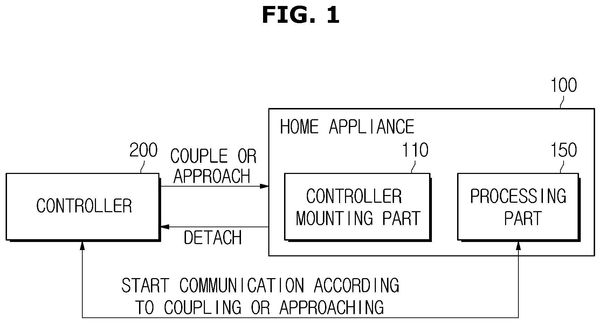

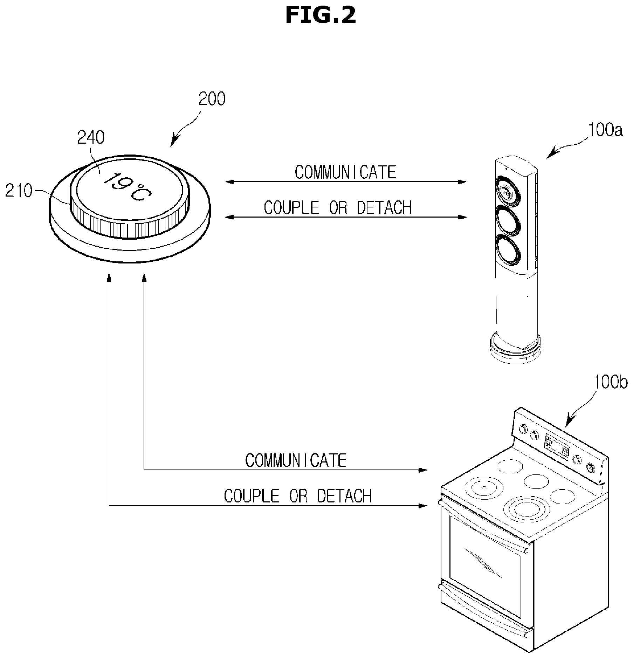

Hereinafter, a home appliance, a controller, and a home appliance control system including the home appliance and the controller will be described with reference to FIGS. 1 and 2. FIG. 1 is a schematic block diagram illustrating one embodiment of the home appliance and the controller. FIG. 2 is a diagram for describing one embodiment of the home appliance control system including the home appliance and the controller.

Referring to FIG. 1, a home appliance 100 may be connected to a controller 200 mounted on the home appliance 100 and controlled according to the manipulation of the controller 200. Specifically, the home appliance 100 may include a controller mounting part 110 on which the controller 200 may be mounted, and a processor 150, which is connected to the controller 200 using a wired or wireless communication method and may transmit and receive data to and from the controller 200 mounted on the controller mounting part 110.

The home appliance 100 refers to encompassing various types of electronic products that are used in-house. For example, the home appliance 100 may include an air conditioning device such as an air conditioner, a refrigerator, a washing machine, a spin-dryer, a television, a radio device, an audio device, a home computer, a microwave, an electric range, a gas range, an oven, a vacuum cleaner, a robot vacuum cleaner, a heater, a hair dryer, an electric rice cooker, an electric iron, an electric stove, an electric cooker, a blender, an electric grill, a bread maker, an electric kettle, etc. Various electronic products used in-house may be an example of the home appliance 100 in addition to the above-described devices.

The controller mounting part 110 may be physically mounted on or separated from the controller 200 using a predetermined fastening means. The controller mounting part 110 may be provided on an outer surface of an external housing of the home appliance 100 for a user's convenience. The controller mounting part 110 may be provided at any point of the outer surface according to a designer's selection of the home appliance 100. When the home appliance 100 has a plurality of outer surfaces, the controller mounting part 110 may be provided on one outer surface or the plurality of outer surfaces. In some embodiments, the controller mounting part 110 may be provided inside the home appliance 100. For example, the controller mounting part 110 may be provided on an outer surface of an internal compartment of a refrigerator.

According to one embodiment, when the controller 200 is connected to the controller mounting part 110, the controller mounting part 110 may output electrical signals according to the connection of the controller 200 to transmit to the processor 150. The processor 150 may determine whether the controller 200 is mounted or not on the home appliance 100 based on the electrical signals received from the controller mounting part 110. The controller mounting part 110 may include a coupling means to which the controller 200 may be coupled. An example of the coupling means will be described below. In the embodiment in which the controller 200 is attached at any point of the outer surface of the external housing of the home appliance 100, the outer surface of the external housing of the home appliance may also be the controller mounting part 110. In other words, any point of the home appliance 100 to which the controller 200 may be attached may be the controller mounting part 110.

The processor 150 may control overall operations of the home appliance 100. The processor 150 may transmit and receive data to and from the controller 200, and control the operations of the home appliance 100 according to the manipulation of the controller 200.

According to one embodiment, the user may manipulate the controller 200 to control the home appliance 100 when the controller 200 is coupled to the controller mounting part 110. In this case, the processor 150 may determine whether the controller 200 is coupled or not based on the electrical signals received from the controller mounting part 110, the presence of the controller 200 to be communicated, the intensity of the received signals, etc. According to another embodiment, even when the controller 200 is not physically mounted on the controller mounting part 110, the processor 150 may establish a session between the home appliance 100 and the controller 200 to control the home appliance 100 according to the manipulation of the controller 200 when the controller 200 is sufficiently close to the home appliance 100 enough to communicate.

The processor 150 may communicate with the controller 200 using a wired communication module or a wireless communication module embedded in the home appliance 100. The processor 150 may also communicate with the controller 200 using both the wired communication module and the wireless communication module as required. The wired communication module may include a communication chip and various terminals for wired communication. The wireless communication module may include a communication chip and an antenna for radiating or collecting radio waves for wireless communication. Here, the wireless communication module may communicate with a communication module of the controller 200 using a wireless communication method such as BluetoothTM, near field communication (NFC), ZigBeeTM, Wireless-Fidelity (Wi-Fi), Wi-Fi direct, Infrared Data Association (IrDA), home radio frequency (HomeRF), ultra wide band (UWB) communication, etc. When the processor 150 transmits and receives data to and from the controller 200, the transmitted and received data may be data encrypted according to a predetermined method. In this case, the processor 150 and the controller 200 may encrypt data to be transmitted or decrypt the received data.

According to one embodiment, when a session is started between the controller 200 and the home appliance 100, the processor 150 may transmit information about the home appliance 100 to the controller 200. Here, the information about the home appliance 100 may include identification information about the home appliance 100 such as a type of the home appliance 100, a serial number (S/N) for identifying the home appliance 100, an identification number such as a media access control (MAC) address or the like, etc. Further, the information about the home appliance 100 may further include at least one of information about various controllable set targets of the home appliance 100 and a current operating state of the home appliance 100. Here, the set target may refer to a target itself which may be adjusted by the user, the processor 150, or the like related to the function of the home appliance 100. For example, the set target may include a refrigerating temperature of a refrigerator, a heating time or a heating temperature of a microwave, various operating modes of the respective home appliance 100, etc. The information about the home appliance 100 may include a plurality of set targets. In this case, an order may be assigned to each of the plurality of set targets. The information about the home appliance 100 may be changed according to the designer's needs. When the controller 200 receives the information about the home appliance 100, the controller 200 may authenticate the home appliance 100 using the information about the home appliance 100.

According to another embodiment, the processor 150 may receive identification information about the controller 200 from the controller 200 and authenticate the controller 200 using the received identification information about the controller 200. Here, the identification information about the controller 200 may include an identification number such as an S/N of the controller 200. When the authentication of the controller 200 is succeeded, the processor 150 may generate a control command for controlling the home appliance 100 according to the manipulation of the controller 200.

The processor 150 may generate the control command for controlling the home appliance 100 based on a control signal which is an electrical signal received from the controller 200. The home appliance 100 may operate according to the control command generated by the processor 150.

The processor 150 may be implemented by one or more semiconductor chips installed on the home appliance 100. The one or more semiconductor chips may be installed on a printed circuit board or the like, and the printed circuit board may be installed or embedded at various positions of the home appliance 100 according to the designer's selection of home appliance 100.

The controller 200 may receive a command from the user and transmit a control signal which is a signal corresponding to the command of the user to the processor 150 of the home appliance 100 so that the home appliance 100 may operate according to the command of the user. As described above, the controller 200 may be mounted on the controller mounting part 110 of the home appliance 100. According to one embodiment, the controller 200 may control the home appliance 100 when the controller 200 is mounted on the controller mounting part 110. According to another embodiment, the controller 200 may control the home appliance 100 even when the controller 200 is not physically mounted on the controller mounting part 110 but is close to the home appliance 100.

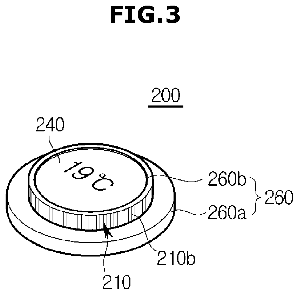

The controller 200 may include manipulating parts 210 to 230 (illustrated in FIG. 3) for receiving commands from the user, and a display part 240 (illustrated in FIG. 3) for displaying information about the home appliance 100. When the user manipulates a manipulation means such as a button, a rotating wheel, a jog shuttle, or the like of the controller 200, the controller 200 may output an electrical signal corresponding to the manipulation of the manipulation means and the output electrical signal may be transmitted to the processor 150 using a predetermined communication means. Detailed embodiments of the controller 200 will be described below.

Referring to FIG. 2, one controller 200 may be mounted on or separated from different home appliances 100a and 100b. When the controller 200 is mounted on or close to any one of the home appliances 100a and 100b, the controller 200 may receive a command for controlling the any one of the home appliances 100a and 100b from the user to control the any one of the home appliances 100a and 100b.

For example, first, the user may enable the controller 200 to be mounted on or close to an air conditioner 100a which is one home appliance, and then manipulate a manipulating part 210 of the controller 200 to adjust a set value of a set target such as a room temperature, presence or absence of wind, and the like of the air conditioner 100a. The air conditioner 100a may operate according to the manipulation of the controller 200. In this case, the air conditioner 100a may transmit and receive data to or from the controller 200 using a wired or wireless communication method. Meanwhile, the controller 200 may display a variety of information related to the air conditioner 100a through the display part 240, etc. Next, the user may detach the controller 200 mounted on the air conditioner 100a from the air conditioner 100a and mount or put the detached controller 200 on or close to an electric oven 100b which is the other home appliance. The user may manipulate the controller 200 which is mounted on or close to the electric oven 100b to adjust a set value such as a heating temperature or the like of the electric oven 100b and control the operation of the electric oven 100b. In other words, the controller 200 may be used for general purposes.

Hereinafter, a home appliance, a controller, a home appliance control system including the home appliance and the controller, and a method of controlling the home appliance will be described with reference to FIGS. 3 to 28C.

First, various embodiments of the controller will be more specifically described with reference to FIGS. 3 to 22.

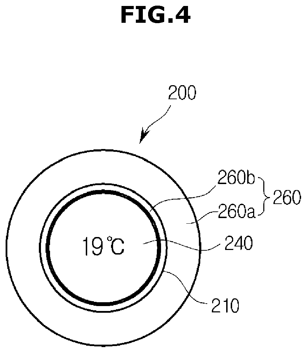

FIGS. 3, 4, and 5 are a perspective view, a plan view, and a bottom view illustrating a first embodiment of the controller, respectively. Referring to FIGS. 3 and 4, a controller 200 may include a housing 260, a first manipulating part 210, which is supported by the housing 260 and rotatable in one direction or in both directions, and a display part 240 which displays information related to a home appliance 100.

The housing 260 may include a lower housing 260a and an upper housing 260b protruding from the lower housing 260a in an upper surface direction. The upper housing 260b may be formed in a shape of a round tube. In addition, the upper housing 260b may have various shapes according to the designer's needs or taste of the controller 200. When the upper housing 260b has the shape of the round tube, the first manipulating part 210 may be installed on an outside of the round tube and the display part 240 may be installed on an inside thereof. In this case, the upper housing 260b may perform a function of a support for supporting the first manipulating part 210 and a function of a bezel for fixing the display part 240 such as a display panel together.

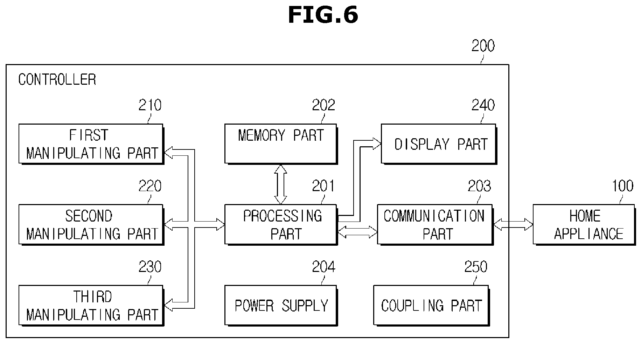

Various parts for controlling the controller 200 may be embedded in the lower housing 260a. For example, a semiconductor chip which performs a function of a processor 201, a memory part 202, or a communication part 203 of the controller 200, and a substrate on which the semiconductor chip is installed may be embedded in the lower housing 260a. In addition, a power supply 204 (illustrated in FIG. 6) such as a capacitor or the like may be embedded in the lower housing 260a. When the power supply 204 is a portable primary battery such as a dry cell battery, a battery compartment to which the battery may be inserted or coupled, and a plurality of terminals which are provided on an inside of the battery compartment and connected to both poles of the battery may be further installed in the lower housing 260a. When the power supply 204 is a capacitor charged by a commercial power source, a connector to which a terminal of the capacitor may be coupled may be further provided on an outer surface of the lower housing 260a.

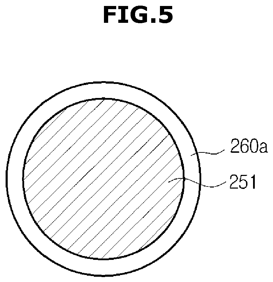

The lower housing 260a may have a shape of a cylinder corresponding to a shape of the first manipulating part 210. However, the shape of the lower housing 260a is not limited thereto. The lower housing 260a may have various shapes such as a hexahedron shape, a hexagonal prism shape, an octagonal prism shape, or the like according to the designer's needs or taste of the controller 200. Referring to FIG. 5, a coupling part 250 for coupling to the controller mounting part 110 of the home appliance 100 may be provided on the lower housing 260a. Therefore, a bottom of the lower housing 260a is attached to the home appliance 100, the display part 240 or the first manipulating part 210 located on an upper portion thereof is exposed to the user, and thus the user may manipulate the controller 200 attached to the home appliance 100. According to one embodiment, the coupling part 250 may be a magnet 251 using a magnetic force.

FIG. 6 is a block diagram illustrating a first embodiment of the controller. Referring to FIG. 6, the controller 200 may include one or more manipulating parts 210 to 230, a processor 201, a memory part 202, a communication part 203, a power supply 204, a display part 240, and a coupling part 250.

The manipulating parts 210 to 230 may receive various commands from the user. According to one embodiment, the manipulating parts 210 to 230 may be operating wheels or jog shuttles rotatable in at least one direction, manipulating buttons, touch screens, or touch pads.

The manipulating parts 210 to 230 may receive different commands according to the home appliance 100 on which the controller 200 is mounted. For example, the manipulating parts 210 to 230 may receive a command for adjusting a refrigerating temperature of a refrigerator when the controller 200 is coupled to the refrigerator, may receive a command for adjusting a cooling temperature when the controller 200 is coupled to an air conditioner, may receive a command for changing a channel or adjusting a sound when the controller 200 is coupled to a television, and may receive a command for changing a cleaning mode of a robot vacuum cleaner when the controller 200 is coupled to the robot vacuum cleaner.

Further, the manipulating parts 210 to 230 may receive a command for changing a specific set value of a set target of the home appliance 100 on which the controller 200 is mounted. For example, when the controller 200 is coupled to the television, the manipulating parts 210 to 230 may receive a command for changing a watching channel from a specific channel to another channel. Further, the manipulating parts 210 to 230 may also receive a command for changing the set target. For example, when the controller 200 is coupled to the television, the set target manipulated through the manipulating parts 210 to 230 may also be changed from the watching channel to a volume. Therefore, even when the controller 200 is mounted on the same home appliance 100, the controller 200 may adjust different set targets. In this case, the different set targets of the same home appliance 100 may also be adjusted using the same manipulating part 210.

In addition, the manipulating parts 210 to 230 may also receive various commands for controlling the controller 200 itself such as the reset of the controller 200, etc.

The manipulating parts 210 to 230 may include the different first to third manipulating parts 210 to 230 as illustrated in FIG. 6. The user may adjust one or more manipulating parts among the first to third manipulating parts 210 to 230 to control the home appliance 100. The first to third manipulating parts 210 to 230 may receive the same command or may also receive different commands. According to the mounted home appliance 100, the first to third manipulating parts 210 to 230 may receive the different commands by the manipulation of the user. Further, the first to third manipulating parts 210 to 230 may also receive a command for adjusting different set targets even when the first to third manipulating parts 210 to 230 are mounted on the same home appliance 100.

Hereinafter, the first manipulating part 210 will be described. The first manipulating part 210 may receive a command for changing a value of the set target by the rotation. The first manipulating part 210 may be an operating wheel or a jog shuttle rotatable in at least one direction. Specifically, the first manipulating part 210 may include a rotor 210a rotatable in at least one direction. The rotor 210a may be a rotating ring installed along an outer surface of the upper housing 260b. The rotating ring may have a circular structure when it is viewed from an upper direction as illustrated in FIG. 4. A projection or a groove 210b may be formed on an outer surface of the rotating ring so that the user may easily rotate and manipulate the rotating ring. When the rotor 210a rotates, a sensor inside the housing 260 may detect the rotation of the rotor 210a and output an electrical signal corresponding thereto according to a direction, angle, or number of rotation of the rotor 210a. The output electrical signal may be transmitted to the processor 201. (210a, 210b, 260a, and 260 are not shown in FIG. 6)

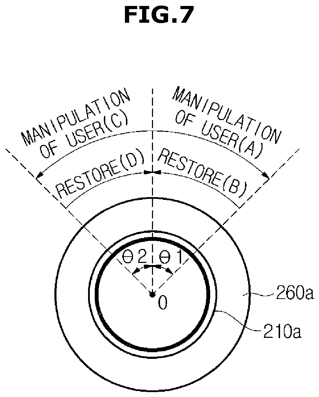

FIG. 7 is a diagram for describing a first embodiment of the first manipulating part of the controller. As illustrated in FIG. 7, while the first manipulating part 210 rotates in a direction A or C when the user applies rotational force to manipulate the first manipulating part 210, the first manipulating part 210 may no longer rotate when a rotational angle reaches limited angles θ1 and θ2. When the force applied by the user is removed after the first manipulating part 210 rotates to the predetermined angles θ1 and θ2, the first manipulating part 210 may rotate in an opposite direction by an elastic member provided inside the housing 260 to be restored to its original position B or D. The elastic member provided inside the housing 260 may include an elastic coil, rubber, a spring, etc. In this case, a range of changing of the set value may be determined according to the number of rotations by the user until the first manipulating part 210 rotates to the limited angles θ1 and θ2, a time at which the first manipulating part 210 which rotates to the limited angles θ1 and θ2 is stopped at the limited angles θ1 and θ2, or the like. Further, a direction of the changing of the set value may be determined according to the rotation direction A or C of the first manipulating part 210 by the manipulation of the user. For example, when the set value is a refrigerating temperature of a refrigerator, a degree of increase or decrease may be determined according to the number of rotations by the user in which the first manipulating part 210 is rotated to the limited angles θ1 and θ2. In addition, the refrigerating temperature of the refrigerator may be set to increase when the user rotates the first manipulating part 210 in a clockwise direction A, and to decrease when the user rotates the first manipulating part 210 in a counterclockwise direction C.

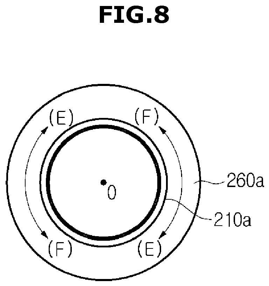

FIG. 8 is a diagram for describing a second embodiment of the first manipulating part of the controller. As illustrated in FIG. 8, the first manipulating part 210 may continuously rotate in one or more directions E and F. In this case, a range of changing of a set value may be determined according to the number of rotations of the first manipulating part 210 in a predetermined direction, and a direction of the changing of the set value may be determined according to the rotation direction E or F of the first manipulating part 210. For example, in the case in which the set value is a refrigerating temperature of a refrigerator, the refrigerating temperature of the refrigerator may be set to increase when the user rotates the first manipulating part 210 in a clockwise direction E, and to decrease when the user rotates the first manipulating part 210 in a counterclockwise direction F. In addition, a degree of increase or decrease of the refrigerating temperature may be determined according to the number of rotations of the first manipulating part 210 by the user.

Hereinafter, the second manipulating part 220 will be described. The second manipulating part 220 may receive a command assigned to the second manipulating part 220 from the user according to the manipulation of the user. According to one embodiment, the command assigned to the second manipulating part 220 may include a command such as a selection complete command of the set value of the set target changed through the first manipulating part 210, a change or selection command of the set target of which the set value will be adjusted, a mode change command of the controller 200, or the like. For example, when the controller 200 is mounted on the home appliance 100 which is a television and the set target currently adjusted by the user through the first manipulating part 210 is a television channel, the user may manipulate the second manipulating part 220 to change the set target adjusted by the first manipulating part 210 to a volume. In this case, the second manipulating part 220 may output an electrical signal according to the manipulation of the user, and the processor 201 may change the set target to the volume, and generate a signal related to the adjustment of the volume according to the manipulation of the first manipulating part 210 to transmit to the television. When the command assigned to the second manipulating part 220 is the change command of the set target, the current set target may also be changed to another set target among the plurality of set targets according to the number of manipulations of the second manipulating part 220.

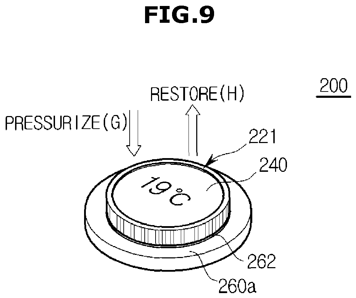

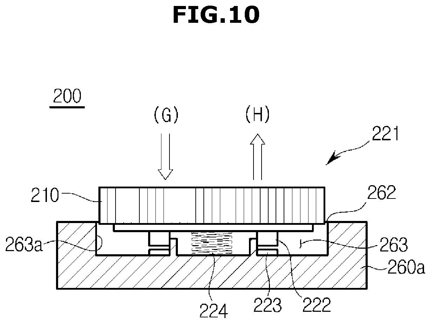

FIG. 9 is a perspective view illustrating a first embodiment of the second manipulating part of the controller. FIG. 10 is a cross-sectional view illustrating the first embodiment of the second manipulating part of the controller. As illustrated in FIGS. 9 and 10, the second manipulating part 220 of the controller 200 may include a first moving part 221 which moves according to the pressure of the user and a first insertion space 263 into which the first moving part 221 is inserted.

The first moving part 221 of the second manipulating part 220 may be inserted into the first insertion space 263 formed in the lower housing 260a according to pressure G of the user. As illustrated in FIG. 9 and FIG 10, the first moving part 221 may include the first manipulating part 210 and the display part 240. The first moving part 221 is connected to a substrate or the like embedded in the lower housing 260a using a connection means such as a cable to transmit and receive required data to and from the processor 201 provided in the lower housing 260a. A first detected part 222 may be installed on a lower end of the first moving part 221 so that a first detecting sensor 223 installed in the first insertion space 263 may easily detect the approaching of the first moving part 221. The first detected part 222 may be provided corresponding to the first detecting sensor 223. For example, when the first detecting sensor 223 is a pressure sensor, the first detected part 222 may be a pressure projection for transmitting the pressure to the first detecting sensor 223.

The first insertion space 263 may be provided by sinking the inside of the lower housing 260a. The first moving part 221 and an internal surface 263a of the first insertion space 263 of the lower housing 260a may be spaced apart from each other by a sufficient distance 262 so that the first moving part 221 may be easily inserted into the first insertion space 263. The first detecting sensor 223 for detecting the insertion of the first moving part 221 and an elastic body 224 for providing restoring force to the first moving part 221 may be installed inside the first insertion space 263 so that the first moving part 221 may be exhausted from the first insertion space 263. The first detecting sensor 223 may include a proximity sensor using an electric or magnetic field, a pressure sensor using the pressure of the outside, etc. When the first detecting sensor 223 detects the first detected part 222, the first detecting sensor 223 may output an electrical signal corresponding to the detection of the first detected part 222 to transmit to the processor 201. In some embodiments, a switch manipulated according to the contact of the first moving part 221 may also be installed in an inside of the first insertion space 263 of the lower housing 260a instead of the first detecting sensor 223. The elastic body 224 may restore the first moving part 221 at a position before pressing using elastic force (H). Various members such as a spring or elastic rubber may be used for the elastic body 224.

According to the first embodiment of the second manipulating part 220, the user may press the first moving part 221 in which both the first manipulating part 210 and the display part 240 are installed in a direction of the lower housing 260a (G) to input various commands assigned to the manipulation of the second manipulating part 220. For example, when the user moves the first moving part 221, a command such as a selection complete command, a change command of the set target, or a mode change command of the controller 200 may be input.

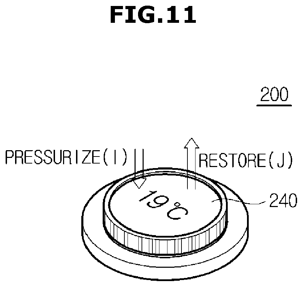

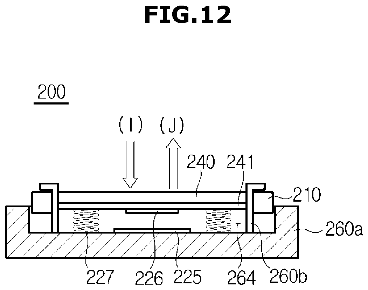

FIG. 11 is a perspective view illustrating a second embodiment of the second manipulating part of the controller. FIG. 12 is a cross-sectional view illustrating the second embodiment of the second manipulating part of the controller. Referring to FIGS. 11 and 12, the second manipulating part of the controller 200 may include a second moving part 241 which moves according to the pressure of the user, and a second insertion space 264 in which the second moving part 241 is inserted.

The second moving part 241 may be inserted into the second insertion space 264 provided in the housing 260 according to the pressure I of the user. As illustrated in FIG. 12, the display part 240 may be installed on an upper end of the second moving part 241. A semiconductor chip or a substrate for controlling the display part 240 may also be provided on the second moving part 241. The second moving part 241 is also connected to the substrate embedded in the lower housing 260a through a cable to transmit and receive required data to or from the processor 201 provided in the lower housing 260a. For example, information about an image to be displayed on the display part 240 may be received from the processor 201. A second detected part 226 detected by a second detecting sensor 225 installed on the second insertion space 264 may be installed on a lower end of the second moving part 241.

The second insertion space 264 may be a space provided on an inside of the upper housing 260b. A rotor 260a may be installed on an outer peripheral surface of the upper housing 260b. The second detecting sensor 225 for detecting the insertion of the second moving part 241 and an elastic body 227 for providing restoring force to the second moving part 241 so that the second moving part 241 may be exhausted from the second insertion space 264 may be installed inside the second insertion space 264. The second detecting sensor 225 may include a proximity sensor, a pressure sensor, etc. When the second detecting sensor 225 detects the second detected part 226, the second detecting sensor 225 may output an electrical signal corresponding thereto. In some embodiments, a switch manipulated according to the contact of the second moving part 241 may also be installed instead of the second detecting sensor 225. The elastic body 227 may use various members such as a spring or elastic rubber, and restore the second moving part 241 at a position before pressing using elastic force J.

When the second manipulating part 220 according to the second embodiment of the present invention is used, the user may press the display part 240 in a direction I of the lower housing 260a, move the second moving part 241, and input various commands assigned to the manipulation of the second manipulating part 220.

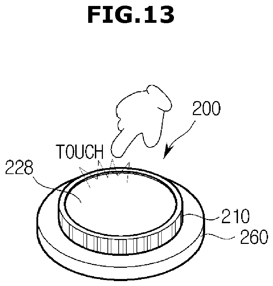

FIG. 13 is a perspective view illustrating a third embodiment of the second manipulating part of the controller. Referring to FIG. 13, the second manipulating part 220 may include a touch screen panel 228 which may input a command according to touch manipulation. The touch screen panel 228 may be installed at a position of the display part 240 instead of the display part 240. The user may touch one point or a plurality of points of the touch screen panel 228 to input a command corresponding to the one point or the plurality of points. An image such as an icon or the like for guiding the touch of the user may be displayed at the one point or the plurality of points so that the user may appropriately input a desired command. When the touch screen panel 228 is used as the second manipulating part 220, the insertion spaces 263 and 264 or the moving parts 221 and 241 may not be required unlike the above-described first and second embodiments of the second manipulating part 220.

The controller 200 may use any one of the above-described first to third embodiments of the second manipulating part 220, or the plurality of embodiments. For example, the second manipulating part 220 may include the first moving part 221 inserted into the first insertion space 263 according to the first embodiment, and at the same time, and may also include the touch screen panel 228 according to the third embodiment.

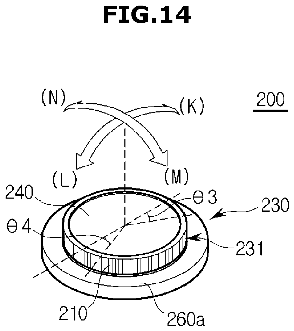

Hereinafter, one embodiment of the third manipulating part 230 will be described. FIG. 14 is a perspective view illustrating one embodiment of the third manipulating part of the controller. As illustrated in FIG. 14, the third manipulating part 230 may receive a command related to various directions K to N. Since the third manipulating part 230 may receive an instruction related to a plurality of directions, the third manipulating part 230 may be used to change the hierarchy, select any one command or data in the same hierarchy, or the like when a command input structure or a data display structure has a hierarchy structure. Further, when a plurality of pieces of data are selected by moving a focus, the third manipulating part 230 may be used to control the movement of the focus. The third manipulating part 230 may receive a command related each of the directions K to N by tilting an upper manipulating part 231 provided on an upper portion of the lower housing 260a in a predetermined direction. For example, when the upper manipulating part 231 is tilted by a predetermined threshold angle θ3 or θ4 or more, a stick connected to the upper manipulating part 231 or a detecting sensor, which is located under or on side surfaces of the upper manipulating part 231 and provided in the lower housing 260a, may detect the tilting of the upper manipulating part 231, output an electrical signal according to a detecting result, and thus receive the command related to each of the directions K to N. The display part 240 and the first manipulating part 210 may be provided in the upper manipulating part 231. Various sensors or sticks for detecting the tilting of the upper manipulating part 231 may be installed in the lower housing 260a.

Hereinafter, the processor 201, the memory part 202, the communication part 203, and the power supply 204 will be described.

The processor 201 may control overall operations of the controller 200. More specifically, the processor 201 may generate a control command for each of the manipulating parts 210 to 230, the memory part 202, the communication part 203, the power supply 204, and the display part 240, transmit the generated control command to each component, and enable each of the manipulating parts 210 to 230, the memory part 202, the communication part 203, the power supply 204, and the display part 240 to perform a predetermined operation. The processor 201 may be implemented by a micro-processor or the like including one or more semiconductor chips, etc.

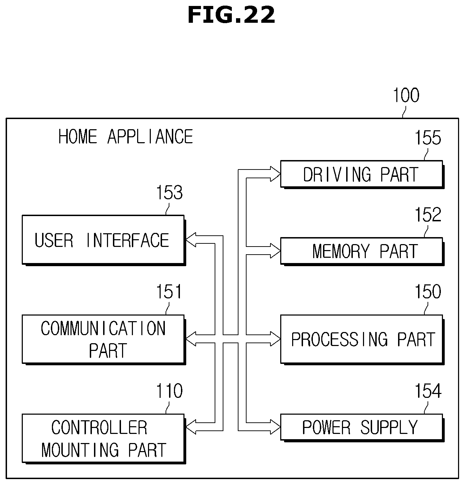

According to one embodiment, the processor 201 may search and detect whether the home appliance 100 which is a target to be communicated with the periphery is present or not through the communication part 203. In addition, when the target to be communicated is found as a result of the searching, the processor 201 may control the communication part 203 so that a session is started between the communication part 203 and the communication part 151 (to be illustrated in FIG. 22) of the home appliance 100.

The processor 201 may determine whether the controller 200 and the home appliance 100 are physically coupled or close or not. According to one embodiment, the processor 201 may also use an electrical signal output from the coupling part 250 or the like in order to determine whether the controller 200 and the home appliance 100 are physically coupled or not. When it is determined that the controller 200 and the home appliance 100 are physically coupled, the processor 201 may determine whether a target to be communicated with the periphery, that is, the communication part 151 of the home appliance 100 is present or not. According to another embodiment, the processor 201 may also use the intensity of the signal between the controller 200 and the home appliance 100 in order to determine whether the controller 200 and the home appliance 100 are physically coupled or close or not. According to still another embodiment, the processor 201 may determine that the controller 200 and the home appliance 100 are physically coupled or close when another communication part 151 to be communicated with the communication part 203 is present. For example, when the communication part 203 performs the communication using NFC, the processor 201 may receive a signal that a tag (or reader) is present from the communication part 203 and determine that the controller 200 and the home appliance 100 are coupled or close according to the received signal. Thus, the processor 201 of the controller 200 may detect the home appliance 100.

According to one embodiment, the processor 201 of the controller 200 may transmit a notification signal about a fact that the controller 200 is coupled or close to the home appliance 100 or the session is started when the controller 200 is coupled or close to the home appliance 100. The transmission of the notification signal may also be performed after the session is started and the communication part 203 and the communication part 151 of the home appliance 100 are logically connected. The home appliance 100 may transmit information about the home appliance, for example, an identification number for authentication of the home appliance 100 or information about a set target to the processor 201 through the communication part 203 of the controller 200 according to the notification signal of the processor 201 of the controller 200.

According to one embodiment, the processor 201 may perform the authentication of the home appliance 100 based on the identification number such as an S/N or an authentication key of the home appliance 100, or identification information including the corresponding information. The information corresponding to the identification number may be a number including a number or text for authenticating that the home appliance 100 is a device which may be controlled by the controller 200. When the home appliance 100 transmits the identification number, the processor 201 may determine whether the home appliance 100 which transmits the identification number is or not the home appliance 100 controlled by the controller 200 using a database, which is provided in the memory part 202 and related to the identification of the home appliance, and the transmitted identification number. When it is determined that the home appliance 100 is the controllable home appliance 100, in other words, the authentication of the home appliance 100 is succeeded, the processor 201 may generate a control signal about the home appliance 100 according to the manipulation of each of the manipulating parts 210 to 230. Further, the processor 201 may also control the display part 240 to display the information about the home appliance 100. When the processor 201 determines that the home appliance 100 is not the controllable home appliance, the processor 201 may enable the home appliance 100 and the controller 200 not to be logically connected to each other using a method, in which the session with the home appliance 100 is terminated or the signal received from the home appliance 100 is ignored.

According to one embodiment, the processor 201 may analyze the information about the home appliance 100 received from the home appliance 100, determine that the controller 200 is coupled or approaches to what kind of the home appliance 100 according to the analysis result, and store the determination result in the memory part 202.

According to one embodiment, the processor 201 may determine whether which set target is adjusted according to the manipulation of the first to third manipulating parts 210 to 230 when the home appliance 100 is authenticated. Specifically, the processor 201 may determine any one manipulating part of the plurality of manipulating parts 210 to 230 of the controller 200, for example, the set target to be controlled according to the manipulation of the first manipulating part 210 according to the home appliance 100 to which the controller 200 is attached. For example, when the home appliance 100 is an air conditioner 100a, the processor 201 may determine the set target to be controlled to a cooling temperature by the first manipulating part 210. The set target may be pre-stored in the memory part 202, and may be included in the information about the set target of the home appliance 100 received from the home appliance 100. The set target may be different according to the home appliance 100 to be controlled by the controller 200. The processor 201 may assign a different set target to be manipulated to each of the manipulating parts 210 to 230. Further, the processor 201 may enable only any one manipulating part among the plurality of manipulating parts 210 to 230, for example, the first manipulating part 210 to receive a command related to the adjustment of the set target. In order to determine the set target to be assigned to each of the manipulating parts 210 to 230, the processor 201 may read the determination result stored in the memory part 202. When the information about the home appliance includes the plurality of set targets, the processor 201 may determine the set target according to an order assigned to each of the set targets. For example, the processor 201 may enable the first manipulating part 210 to adjust a set value of the set target to which a first order is assigned, and the second manipulating part 220 to adjust a set value of the set target to which a second order is assigned. When only one manipulating part, for example, the first manipulating part 210 adjusts the set target, the set value adjusted by the first manipulating part 210 may be the set value of the set target to which the first order is assigned.

The processor 201 may change the adjustable set target assigned to each of the manipulating parts 210 to 230 as required. The processor 201 may change the set target to be adjusted according to the manipulation of the user with respect to any one of the first to third manipulating parts 210 to 230, for example, the second manipulating part 220. For example, when the user manipulates the second manipulating part 220, the existing set target, for example, a cooling temperature may be changed to another set target, for example, an operating mode. When the information about the home appliance 100 includes the plurality of set targets, the processor 201 may change the set target according to the order assigned to each of the plurality of set targets. Specifically, the processor 201 may determine the set target manipulated by the first manipulating part 210 to the set target to which the first order is assigned, and change the set target to which the first order is assigned to the set target to which the second order is assigned when the user changes the set target.

According to one embodiment, the processor 201 may receive the electrical signals output from the first to third manipulating parts 210 to 230 according to the manipulation of the user, and generate a control signal for changing the set value of the set target based on the received electrical signals. The processor 201 of the controller 200 may generate a control signal for changing set values of different set targets according to the home appliance 100. The generated control signal may be transmitted to the home appliance 100 through the communication part 203. For example, in the case in which the home appliance 100 is a refrigerator and the controller 200 is set to control a refrigerating temperature of the refrigerator through the first manipulating part 210 of the controller 200, the processor 201 may generate a control signal for controlling the refrigerating temperature according to a rotor 210a to transmit to the refrigerator through the communication part 203 and change the refrigerating temperature of the refrigerator when the user rotates the rotor 210a of the first manipulating part 210. In this case, it is possible that the processor 150 of the home appliance 100 generates a driving signal which is the corresponding control signal using the control signal received from the processor 201 of the controller 200 and then controls the operation of the home appliance 100.

According to another embodiment, the processor 201 may transmit information corresponding to the electrical signals output from the first to third manipulating parts 210 to 230 and information about the set target, of which a current set value is changed by the controller 200, to the home appliance 100. In this case, the processor 150 of the home appliance 100 may generate a driving signal of the home appliance 100 based on the received information.

In some embodiments, the processor 201 may control the transmission of information about the controller 200 to the home appliance 100. Here, the information about the controller 200 may include an identification number for identifying the controller 200. The identification number may include an authentication key or an S/N of the controller 200. The authentication key or the S/N may be encrypted and transmitted to the home appliance 100.

The processor 201 may transmit information to be displayed to the display part 240 and enable the display part 240 to display information related to the home appliance 100. The information related to the home appliance 100 displayed on the display part 240 may be the current set value of the set target. For example, when the home appliance 100 is an air conditioner 100a, the current set value of the set target may be a current cooling temperature of the air conditioner 100a. The processor 201 may output a control command for displaying different information from the information displayed on the display part 240 according to the selection of the user. For example, when the home appliance 100 is the air conditioner 100a and the display part 240 displays a current value of the cooling temperature, the processor 201 may generate a control command for displaying a current driving mode of the air conditioner 100a, for example, a cooling mode or a fan mode on the display part 240 to transmit to the display part 240. The processor 201 may read the determination result stored in the memory part 202 to generate the control command.

The memory part 202 may store a variety of information required for the control of the controller 200 by the processor 201. The memory part 202 may store the information about the home appliance 100 which is connected and controlled by the controller 200, and may also store information about the target controlled according to each of the first to third manipulating parts 210 to 230, for example, the set target. The information stored in the memory part 202 may be changed or updated by the processor 201. The memory part 202 may temporarily or non-temporarily store a variety of information. The memory part 202 may be implemented by a semiconductor storage device or a magnetic disk storage device. The memory part 202 may also be implemented by one type of storage device or various types of storage devices. For example, the memory part 202 may also be implemented by a combination of a random access memory (RAM) and a read only memory (ROM).

The communication part 203 performs a data communication function between the home appliance 100 and the controller 200. The communication part 203 may be a wired communication module or a wireless communication module as described above. When the communication part 203 is the wired communication module, the communication part 203 may include a communication chip and various terminals. The wired communication module may further perform a function of the coupling part 250. When the communication part 203 is the wireless communication module, the communication part 203 may transmit and receive data using a wireless communication method and include a communication chip, an antenna, etc. The wireless communication method may include at least one of Bluetooth, NFC, ZigBee, Wi-Fi, IrDA, HomeRF, and UWB communication. The communication part 203 may use the same type of the communication module as the communication part 151 of the home appliance 100 in order to communicate with the communication part 151 of the home appliance 100.

The power supply 204 supplies a necessary power source to the controller 200. The power supply 204 may be provided in the lower housing 260a. The power supply 204 may include a portable primary battery such as a dry cell battery or a capacitor which may store power. When the power supply 204 includes the portable primary battery, the power supply 204 may further include a battery compartment which accommodates the primary battery and a terminal. The capacitor may charge electricity supplied through the terminal or a second terminal 254 provided in the lower housing 260a of the controller 200.

The display part 240 may display information about the controller 200 itself or information about the home appliance 100. The information about the controller 200 itself may include various descriptions related to the manipulation of the controller 200, the identification number of the controller 200, etc. Here, the information about the home appliance 100 may include a type of the home appliance 100, a controllable set target in the home appliance 100, a current set value of the set target, and information about a current operating state of the home appliance 100. The display part 240 may display different information according to the type of the home appliance 100 to which the controller 200 is coupled or close. For example, the display part 240 may display a cooling temperature when the home appliance 100 is an air conditioner 100a and display the heat intensity of a cooktop when the home appliance 100 is an electric range.

The display part 240 may display the type of the home appliance 100 controlled by the user, the controllable set target, the current set value of the set target, the information related to the current operation of the home appliance 100, and the information about the controller 200 itself through a graphic user interface (GUI). The GUI may have various designs according to the designer's arbitrary selection of the controller 200. For example, the display part 240 may simply display only the current set value of the set target, for example, the current cooling temperature using a predetermined font. In addition, the display part 240 may display various still images or moving pictures for convenience and aesthetic sense of the user.

The display part 240 may use at least one of a plasma display panel (PDP), a liquid crystal display (LCD) panel, an organic light emitting diode (OLED) panel, a light emitting diode (LED) panel, and a touch panel. In addition, various means which may display a text or an image to the user may be used for the display part 240.

Hereinafter, an embodiment in which the controller is coupled to the home appliance, the controller mounting part 110 provided in the home appliance 100, and the coupling part 250 of the controller 200, for the coupling will be described.

The coupling part 250 may be coupled to the controller mounting part 110 provided in the home appliance 100. The home appliance 100 and the controller 200 may be coupled or separated through the controller mounting part 110 and the coupling part 250. The coupling part 250 may output a predetermined electrical signal to transmit to the processor 201 when the home appliance 100 and the controller 200 are coupled, and thus enable the processor 201 to determine whether the controller 200 is coupled to the home appliance 100.

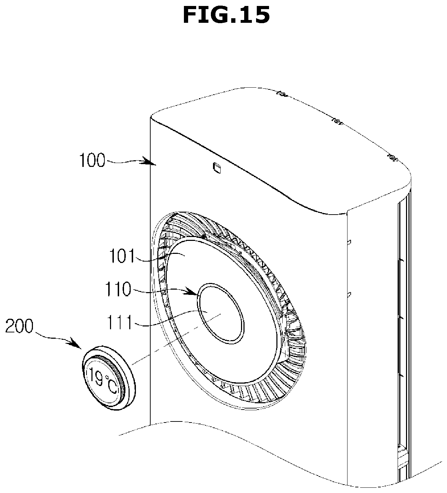

FIG. 15 is a diagram illustrating a first embodiment of a coupling of a controller mounting part, a coupling part, a controller, and a home appliance. Referring to FIGS. 6 and 15, the coupling part 250 and the controller mounting part 110 may be attached and coupled to each other by magnetic force generated by a permanent magnet or an electromagnet. The coupling part 250 may be implemented by the permanent magnet or the electromagnet provided on a bottom of the controller 200 as illustrated in FIG. 5. The controller mounting part 110 may be implemented by the permanent magnet or the electromagnet provided inside a coupling surface 111. The coupling surface 111 refers to a surface which is formed in an external housing 101 of the home appliance 100 and is in contact with the controller 200. The controller mounting part 110 may further include one or more sensors which may output an electrical signal according to the attachment of the coupling part 250 when the controller mounting part 110 is coupled to the coupling part 250. The one or more sensors may include a proximity sensor, a pressure sensor, or an optical sensor. The one or more sensors may be provided in the coupling surface 111.

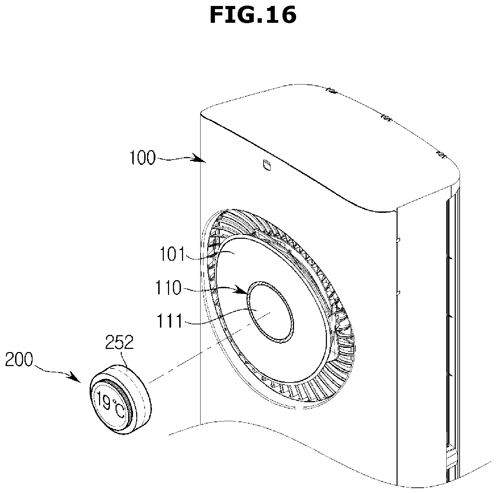

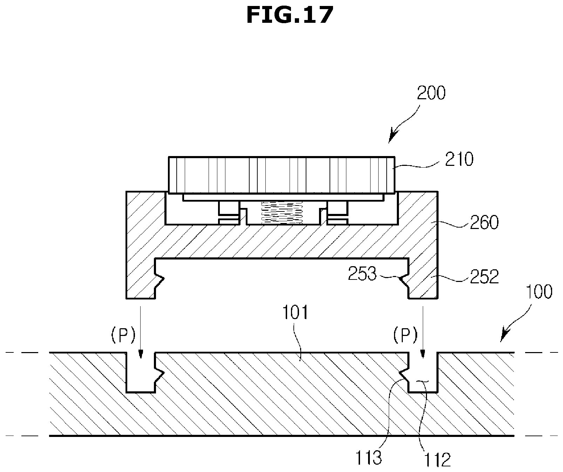

FIG. 16 is a diagram illustrating a second embodiment of a coupling of a controller mounting part, a coupling part, a controller, and a home appliance. FIG. 17 is a cross-sectional view illustrating the controller which may be coupled in accordance with the second embodiment of the present invention.

Referring to FIGS. 16 and 17, the coupling part 250 of the controller 200 may include an insertion projection 252 protruding from a bottom thereof to the outside. The insertion projection 252 may have a circular ring shape of according to a shape of the bottom of the controller 200. However, the shape of the insertion projection 252 is not limited thereto, and may be changed according to the designer's intention. A fixing projection 253 may protrude from an inner peripheral surface of the insertion projection 252. The fixing projection 253 is inserted into a fixing groove 113 provided inside an insertion groove 112 when the insertion projection 252 is inserted into the insertion groove 112 (P), and it is possible to prevent the controller 200 from being arbitrarily detached from the home appliance 100 due to the influence of gravity. The fixing projection 253 may also be formed on an outer peripheral surface of the insertion projection 252. The controller mounting part 110 of the home appliance 100 may include the insertion groove 112 into which the insertion projection 252 is inserted (P). The insertion groove 112 may be provided in the external housing 101 of the home appliance 100. The insertion groove 112 may be formed in a shape corresponding to the insertion projection 252, for example, a circular shape so that the insertion projection 252 is inserted and coupled. The fixing groove 113 to which the fixing projection 253 is coupled may be provided inside the insertion groove 112. The fixing groove 113 may also be provided in a direction of a coupling surface as illustrated in FIG. 17, or in the opposite direction. The fixing groove 113 may be provided at a position corresponding to the direction in which the fixing projection 253 is formed on the insertion projection 252. In some embodiments, a sensor which may detect the coupling of the controller 200 may be provided inside the insertion groove 112 or on the coupling surface 111 of the home appliance 100.

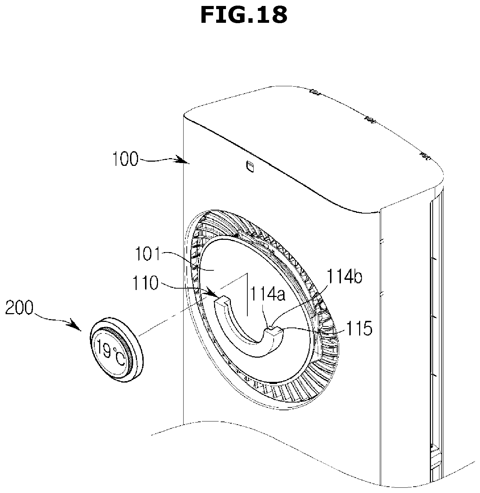

FIG. 18 is a diagram illustrating a third embodiment of a coupling of a controller mounting part and a controller in a home appliance. Referring to FIG. 18, the controller mounting part 110 of the home appliance 100 may include a mounting part 115 on which the controller 200 may be mounted. The mounting part 115 may be provided on an outer surface of the external housing 101 of the home appliance 100. The mounting part 115 may include an insertion space 114b in which the controller 200 is inserted and a projection 114a which protrudes so that the controller 200 inserted into the insertion space 114b is not arbitrary detached. The insertion space 114b of the mounting part 115 may have a shape corresponding to an outer shape of the controller 200. When the controller 200 is mounted on the mounting part 115, a sensor which outputs a corresponding electrical signal, such as a proximity sensor, a pressure sensor, or the like may be provided in the mounting part 115 as required.

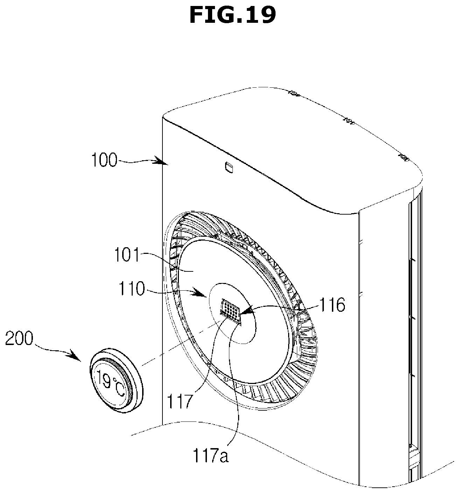

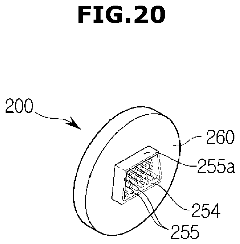

FIG. 19 is a diagram illustrating a fourth embodiment of a coupling of a controller mounting part and a controller in a home appliance. FIG. 20 is a bottom view illustrating the controller which is possible to be coupled in accordance with the fourth embodiment of the present invention.

According to FIGS. 19 and 20, the controller mounting part 110 of the home appliance 100 may include a first terminal 116, and the coupling part 250 of the controller 200 may include a second terminal 254 corresponding to the first terminal 116. The second terminal 254 may be installed on a bottom of a lower housing 260 of the controller 200. The first terminal 116 and the second terminal 254 may be coupled, electrically connected according to the coupling, and enable the home appliance 100 and the controller 200 to transmit and receive various electrical signals to and from each other. Therefore, the controller mounting part 110 and the coupling part 250 in accordance with the fourth embodiment of the present invention may perform functions of the communication parts 151 and 203.

A plurality of pin insertion holes 117 may be provided in the first terminal 116, and a plurality of pins 255 inserted into the pin insertion holes 117 of the first terminal 116 may be provided in the second terminal 254. When the plurality of pins 255 are inserted into the plurality of pin insertion holes 117, the first terminal 116 and the second terminal 254 may be electrically connected to each other. Meanwhile, in order to stably connect the controller mounting part 110 to the coupling part 250, an insertion groove 117a may be provided in the controller mounting part 110 and an insertion projection 255a inserted into the insertion groove 117a may be provided in the coupling part 250.

The first terminal 116 of the controller mounting part 110 may be any one of a serial port, a parallel port, a small computer system interface (SCSI External) port, a Deutsches Institut für Normung (DIN) port, an apple desktop bus (ADB) port, a play station (PS/2) port, a Universal Serial Bus (USB) port, and an Institute of Electrical and Electronics Engineers (IEEE) 1394 port. The second terminal 254 may be a port corresponding to the first terminal 116. The second terminal 254 may also be any one of a serial port, a parallel port, a SCSI External port, a DIN port, an ADB port, a PS/2 port, a USB port, and an IEEE 1394 port.

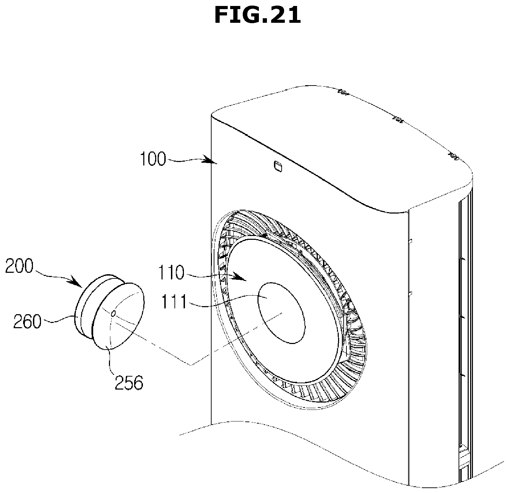

FIG. 21 is a diagram illustrating a fifth embodiment of a coupling of the controller and the home appliance. Referring to FIG. 21, the coupling part 250 may be an adsorber 256. The adsorber 256 may be attached to the coupling surface 111 of the home appliance 100 using the pressure of the air. In this case, the coupling surface 111 may be any point of an external housing 101. The absorber 256 may be installed on a lower housing 260 of the controller 200.

Hereinafter, various embodiments of the home appliance will be described with reference to FIGS. 22 to 24.

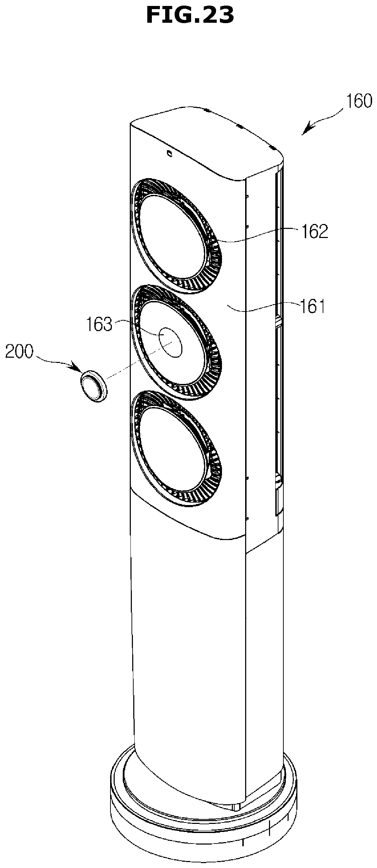

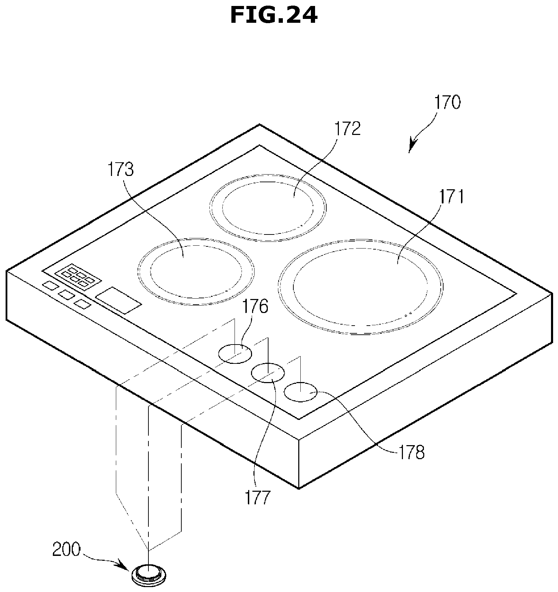

FIG. 22 is a block diagram illustrating a first embodiment of the home appliance. FIG. 23 is a diagram illustrating an air conditioner as a first example of a first embodiment of the home appliance. FIG. 24 is a diagram illustrating an electric range as a second example of a first embodiment of the home appliance.

Referring to FIG. 22, the home appliance 100 may include a controller mounting part 110, a processor 150, a communication part 151, a memory part 152, a user interface 153, a power supply 154, and a driving part 155.

The controller 200 may be coupled to the controller mounting part 110 as described in FIGS. 1, and 15 to 21. In some embodiments, the controller mounting part 110 may further include a sensor which outputs a corresponding electrical signal according to the coupling of the controller 200. The sensor may include a proximity sensor or a pressure sensor. In the controller mounting part 110, only one mounting part 163 may be provided in a home appliance 160 as illustrated in FIG. 23, and a plurality of mounting parts 176 to 178 may be provided in a home appliance 170 as illustrated in FIG. 24.

The processor 150 may control overall operations of the home appliance 100. More specifically, the processor 150 may generate a control command or a driving signal with respect to at least one of the communication part 151, the memory part 152, the user interface 153, the power supply 154, and the driving part 155, transmit the generated control command or driving signal to each of the communication part 151, the memory part 152, the user interface 153, the power supply 154, and the driving part 155, and control the communication part 151, the memory part 152, the user interface 153, the power supply 154, and the driving part 155 to perform predetermined operations.

According to one embodiment, the processor 150 may determine whether a target to be communicated with the periphery, for example, the controller 200 is present or not through the communication part 151. When the controller 200 to be communicated is found, the processor 150 may control the communication part 151 so as to be logically connected to the controller 200. The processor 150 may authenticate the controller 200, and control so as to start a session between the communication part 203 of the controller 200 and the communication part 151 of the home appliance 100 according to the authentication result. In this case, the processor 150 and the processor 201 of the controller 200 operate together and control so as to start the session between the communication part 203 of the controller 200 and the communication part 151 of the home appliance 100.

According to one embodiment, the processor 150 may determine whether the controller 200 and the home appliance 100 are physically coupled or not or the controller 200 is close to the home appliance 100 or not in the same manner as the processor 201 of the controller 200. In the same manner as described above, the processor 150 may determine whether the controller 200 and the home appliance 100 are physically coupled or not or close to each other or not using the intensity of the signal or the presence or absence of the signal output from the controller mounting part 110 or the signal transmitted to the communication part 151. The processor 150 may determine whether a target to be communicated with the periphery, that is, the communication part 203 of the controller 200 is present or not when the controller 200 and the home appliance 100 are physically coupled using the signal output from the controller mounting part 110 or the signal transmitted to the communication part 151. The processor 150 of the home appliance 100 may detect the presence of the controller 200 through the above process.

According to one embodiment, when the controller 200 is coupled to the home appliance 100 or the controller 200 is close to the home appliance 100 within a certain distance and the communication part 151 of the home appliance 100 and the communication part 203 of the controller 200 are logically connected, the processor 150 may transmit a notification signal that the controller 200 and the home appliance 100 are in a coupling or closing state to the controller 200.

When the controller 200 transmits the notification signal that the controller 200 and the home appliance 100 are in the coupling or closing state to the home appliance 100, the processor 150 may control so as to transmit information about the home appliance, for example, an identification number for authentication of the home appliance 100 or information about the set target to the processor 201 of the controller 200 according to the notification signal of the processor 201 of the controller 200.

According to one embodiment, when the controller 200 transmits the identification information about the controller 200 to the home appliance 100, the processor 150 may authenticate the controller 200 similar to the processor 201 of the controller 200 using the identification information about the controller 200. The identification information about the controller 200 may include an identification number such as an S/N or an authentication key, or information corresponding thereto. Specifically, the processor 150 may authenticate the controller 200 using a database including information for identifying the controller 200 stored in the memory part 152 and the transmitted identification number.

When the authentication of the controller 200 is succeeded, the processor 150 may generate a driving signal for controlling the driving part 155 of the home appliance 100 according to the control signal received from the controller 200 or the corresponding signal. In this case, the control signal received from the controller 200 may include a command to change a set value of the set target of the home appliance 100, and the set target and the set value of the set target to be changed. When the authentication of the controller 200 is failed, the processor 150 may terminate the session between the controller 200 and the home appliance 100 or ignore the control signal received from the controller 200.

Further, when the driving part 155 performs an operation and transmits a feedback signal corresponding to the performed operation, the processor 150 may determine a current state of the driving part 155, for example, what temperature is adjusted to a current temperature as a room temperature based on the received feedback signal, and transmit information about the operating state of the driving part 155 to the controller 200. Here, the information about the operating state of the driving part 155 may include a current set value of the set target.

Further, the processor 150 may convert information about a failure generated in the driving part 155 or in each component of the home appliance into an error signal to transmit to the controller 200. The error signal may be a predefined signal according to the failure or the like generated in the home appliance, etc. In this case, the controller 200 may display a warning message to notify the error to the user according to the error signal through the display part 240.

The processor 150 may control each driving part 155 of the home appliance 100 according to the signal received from the user interface 153. According to one embodiment, after the session between the controller 200 and the home appliance 100 is started, the processor 150 may control the user interface 153 so that the command of the user is not input through the user interface 153. According to another embodiment, even after the session between the controller 200 and the home appliance 100 is started, the processor 150 may receive the command of the user through the user interface 153. In this case, even when the controller 200 is mounted, the user may control the home appliance 100 through both the user interface 153 and the controller 200.

The communication part 151 may perform a data communication function between the home appliance 100 and the controller 200. The communication part 151 may be a wired communication module including a communication chip and various terminals and a wireless communication module including a communication chip, an antenna, etc. The wireless communication module may communicate using at least one wireless communication method of Bluetooth, NFC, ZigBee, Wi-Fi, IrDA, HomeRF, and UWB communication. The communication part 151 may be the same as the communication part 203 of the controller 200.

The memory part 152 may store a variety of information required for the control of the home appliance 100. The memory part 152 may store information about the controller 200 which may be connected to the home appliance 100. Here, the information about the controller 200 may be an identification number for identifying the controller 200. The identification number may include an authentication key. The memory part 152 may be a memory device which temporarily stores a variety of information and a memory device which non-temporarily stores the variety of information. The memory part 152 may use a semiconductor storage device or a magnetic disk storage device. The memory part 152 may also be implemented by one type of a storage device or various types of storage devices.

The user interface 153 may receive a predetermined command from the user or provide a variety of information to the user. The user interface 153 may include various types of input means such as a physical button, a knob, a touch pad, a touch screen, or the like, or a display means using at least one of a PDP, an LCD panel, an OLED panel, an LED panel, and a touch panel. The user interface 153 may be independently operated regardless of the coupling of the controller 200 and the operation thereof may be stopped according to the coupling or approaching of the controller 200.

The power supply 154 may supply a power source to the home appliance 100. The power supply 154 may supply a current to each part of the home appliance 100 using a commercial power source entered from the outside. The power supply 154 may convert an alternating current into a direct current as required.

The driving part 155 may perform an appropriate operation according to the function of the home appliance 100. The driving part 155 may perform the operation according to the control of the processor 150 as required, and then may transmit again a feedback signal which indicates a result of the performance of the operation to the processor 150. The feedback signal may include the changed set value according to the performance of the operation. Further, the driving part 155 may transmit the failure information that is information corresponding to the occurred failure when a failure occurs to the processor 150 as required. The processor 150 may convert the failure information into an error signal corresponding to the failure, and transmit the converted error signal to the controller 200.

For example, when the home appliance 100 is an air conditioner 160 as illustrated in FIG. 23, the driving part 155 may include an air conditioning unit. The air conditioning unit may cool the air, and then perform an operation for discharging the cooled air to the outside. The air conditioning unit may include an evaporator which converts low-pressure liquid refrigerant into low-pressure gas refrigerant and take away and cools the heat of the periphery, a compressor which converts the low-temperature low-pressure gas refrigerant into high-temperature high-pressure gas refrigerant, a condenser which condenses the high-temperature high-pressure gas refrigerant to be converted into high-temperature high-pressure liquid refrigerant, an expansion valve which suddenly expands the refrigerant from the evaporator, an air inlet which supplies air of the outside, a tube structure which connects them, and various substrate which controls them. The processor 150 of the air conditioner 160 may generate a driving signal which controls the air conditioning unit according to the control signal received from the controller 200 to transmit to the air conditioning unit. Here, the control signal may include at least one of a cooling temperature, an operating time, an air discharge direction, intensity of wind, an operation reservation time, and an operating mode. The cooled low-temperature air is discharged through an outlet 162 and thus it is possible to lower the room temperature.

For example, the home appliance 100 may be the air conditioner 160 as illustrated in FIG. 23. A coupling surface 163 to which the controller 200 may be coupled may be provided in an external housing 161 of the air conditioner 160. The coupling surface 163 may be provided at any place of the external housing 161 of the air conditioner 160 according to the selection of the designer. The coupling surface 163 may be provided at a height of the hand of the user for convenience of the user.

For example, the home appliance 100 may be an electric range 170 as illustrated in FIG. 24. A plurality of cooktops 171 to 173 which generate heat to supply to the outside may be installed on an upper surface of the electric range 170. A plurality of coupling surfaces 176 to 178 to which the controller 200 may be coupled may be provided on the upper surface or side surfaces of the electric range 170. According to one embodiment, the plurality of coupling surfaces 176 to 178 may be provided on the electric range 170. Each of the coupling surfaces 176 to 178 may correspond to each of the cooktops 171 to 173. In other words, the user may control the first cooktop 171 corresponding to the first coupling surface 176 using the controller 200 when the controller 200 is coupled to the first coupling surface 176, and the user may control the second cooktop 172 corresponding to the second coupling surface 177 using the controller 200 when the controller 200 is coupled to the second coupling surface 177. In this case, the user may adjust a temperature of the first cooktop 171 or the second cooktop 172. In this case, the processor 150 of the electric range 170 may generate a temperature adjustment signal of each cooktop to transmit to each cooktop.

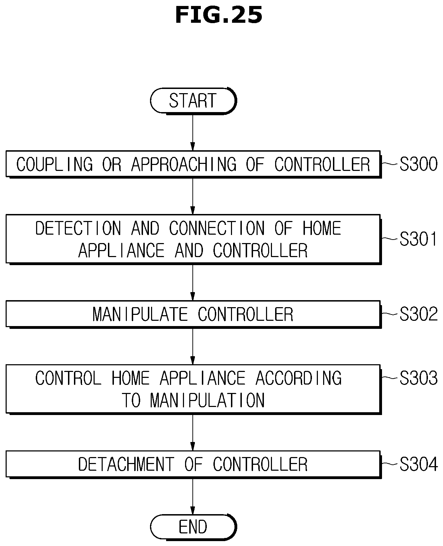

Hereinafter, an embodiment of a method of controlling a home appliance through a controller will be described with reference to FIGS. 25 to 27B.

FIG. 25 is a schematic flowchart illustrating the method of controlling the home appliance. Referring to FIG. 25 first, when the controller 200 is mounted or close to the home appliance 100 (S300), the home appliance 100 mounted or close to the controller 200 or the controller 200 mounted or close to the home appliance 100 may be detected.

After the controller 200 or the home appliance 100 is detected, a session is established between the controller 200 and the home appliance 100 so as to transmit and receive data to or from each other, and the home appliance 100 may be controlled according to the manipulation of the controller 200 (S301).

The user may manipulate the controller 200 (S302), and the home appliance 100 may be controlled according to the manipulation of the controller 200 by the user (S303).

When the control of the home appliance 100 by the user is terminated, the controller 200 may be separated or detached from the home appliance 100. The separated or detached controller 200 may be mounted or close to other home appliances 100a and 100b to be used to control the other home appliances 100a and 100b.

Hereinafter, various embodiments of a method of controlling a home appliance through a controller will be more specifically described.

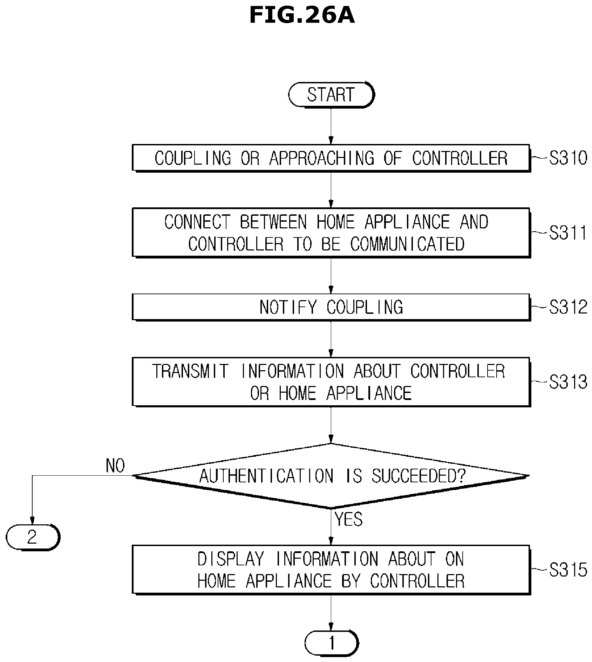

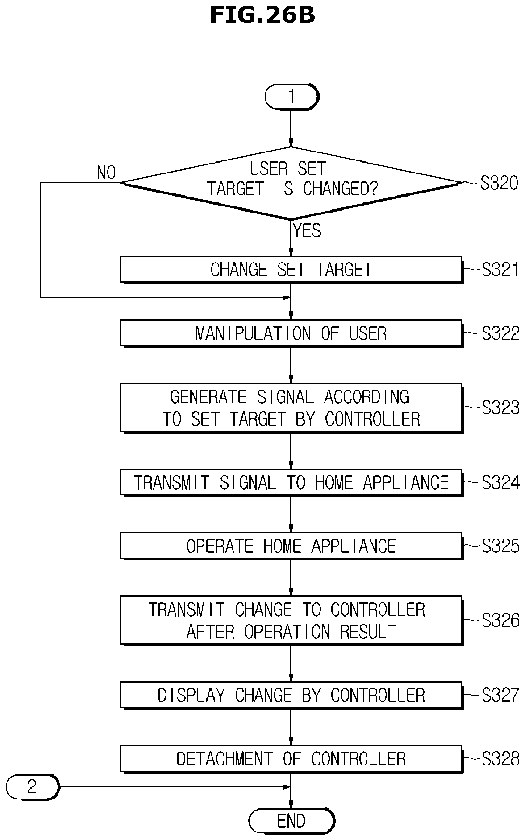

FIGS. 26A and 26B are flowcharts illustrating a first embodiment of the method of controlling the home appliance through the controller.

As illustrated in FIG. 26A, when the controller 200 is mounted or close to the home appliance 100 through coupling parts (S310), a session may be started between the controller 200 and the home appliance 100 to be connected to communicate with each other (S311).

According to one embodiment, the processor 201 of the controller 200 may determine whether the controller 200 is mounted or close to the home appliance 100 or not using a signal output from the coupling part 250, the presence or absence of the home appliance 100 to be communicated, the intensity of the received signal, etc. According to another embodiment, the processor 150 of the home appliance 100 may determine whether the controller 200 is mounted or close to the home appliance 100 using a signal output from the controller mounting part 110, the presence or absence of the controller 200, the intensity of the received signal, etc.

When the controller 200 and the home appliance 100 are mounted or close to each other, the session is started therebetween, and the controller 200 and the home appliance 100 may be connected to each other (S311). In this case, the controller 200 and the home appliance 100 may be connected to each other through a wireless communication method or a wired communication method.

When the controller 200 and the home appliance 100 are connected to be communicated, the controller 200 may transmit a notification signal which indicates a mounting state to the home appliance 100 through a communication network connected to the home appliance 100 (S312). In some embodiments, the home appliance 100 may also transmit a notification signal, which indicates that the controller 200 is mounted on the home appliance 100, to the controller 200. In addition, the home appliance 100 may transmit information about the home appliance 100, for example, identification information about the home appliance 100 in addition to the notification signal to the controller 200.

When the home appliance 100 receives the notification signal, the home appliance 100 may transmit the information about the home appliance 100 to the controller 200 according to the received notification signal with encrypting or without encrypting (S313). Here, the information about the home appliance 100 may include at least one of a type of the home appliance 100, an identification number of the home appliance 100, a controllable set target in the home appliance 100, and information about the operating state of the home appliance 100. In some embodiments, when the controller 200 receives the notification signal, the controller 200 may transmit information about the controller 200 to the home appliance 100 according to the received notification signal with encrypting or without encrypting. The information about the controller 200 may include an identification number such as an S/N of the controller 200.

When the controller 200 receives the information about the home appliance 100 from the home appliance 100 (S313), the controller 200 may perform authentication on the home appliance 100 using the information about the home appliance 100. Further, when the home appliance 100 receives the information about the controller 200 from the controller 200, the home appliance 100 may perform authentication on the controller 200 using the information about the controller 200. To this end, the processor 150 of the home appliance 100 or the processor 201 of the controller 200 may refer to a database provided in separated memory devices 152 and 202.

When the home appliance 100 or the controller 200 fails in the authentication of the controller 200 or the home appliance 100, the connection between the home appliance 100 and the controller 200 is terminated and the home appliance 100 may not be controlled by the controller 200.

When the home appliance 100 or the controller 200 succeeds in the authentication of the controller 200 or the home appliance 100, the controller 200 may display the information about the home appliance 100 through the display part 240. The information about the home appliance 100 displayed on the display part 240 may include at least one of a type of the home appliance 100, a set target, and a set value of the set target. Meanwhile, the controller 200 is set to receive a control command for controlling the home appliance 100 from the user. For example, when the user manipulates the first manipulating part 210, the set target is determined and the controller 200 is set to change a set value of the determined set target. In this case, the first-determined set target may be the determined set target according to a defined setting of the home appliance 100 or the controller 200, or according to the selection of the user. When the information about the home appliance 100 includes the plurality of set targets, an order may be assigned to each of the plurality of set targets. In this case, the first-determined set target may be a set target to which a first order is assigned.

As illustrated in FIG. 26B, when the user wants to change the first-determined set target (S320), the user may manipulate any one manipulating part of the manipulating parts 210 to 230 provided in the controller 200, for example, the second manipulating part 220 to change the set target (S321). For example, the user may press one time the second manipulating part 220 to select a different set target from the current set target. In this case, the selected different set target may be a set target of a next order to the current set target.

When the set target is determined, the user may manipulate the manipulating part corresponding to the set target, for example, the first manipulating part 210 to input a set value change command in order to adjust a set value of the set target (S322).

According to one embodiment, the processor 201 of the controller 200 may receive a signal output from the first manipulating part 210, generate a control signal corresponding to the set value change command of the user according to the received signal and the set target (S323), and transmit the generated control signal to the home appliance 100 through a wireless communication method or a wired communication method with encrypting or without encrypting (S324).

According to another embodiment, the processor 201 of the controller 200 may receive an electrical signal output from the first manipulating part 210, and transmit the received electrical signal and information about the set target to the home appliance 100 with encrypting or without encrypting (S323 and S324).

The processor 150 of the home appliance 100 may generate a driving signal based on the control signal or the electrical signal received from the controller 200 and information about the set target to transmit to the driving part 155 of the home appliance 100, and the driving part 155 of the home appliance 100 may operate according to the driving signal (S325).

After the operation of the driving part 155, the driving part 155 may transmit a feedback signal including the changed set value according to the operation to the processor 150 of the home appliance 100, and the processor 150 may determine a current state of the driving part 155 and transmit information about the current state of the driving part 155 including the changed set value to the controller 200 (S326). The controller 200 may receive the information about the changed set value and display the changed set value on the display part 240 according to the received information.

When the control of the home appliance 100 is terminated, the controller 200 may be detached from the home appliance 100 according to need of the user. When the controller 200 releases the coupling of the home appliance 100 to be separated, or is far from the home appliance 100 by a predetermined distance or more, the session between the controller 200 and the home appliance 100 may be terminated, and the control of the home appliance 100 by the controller 200 may also be terminated.

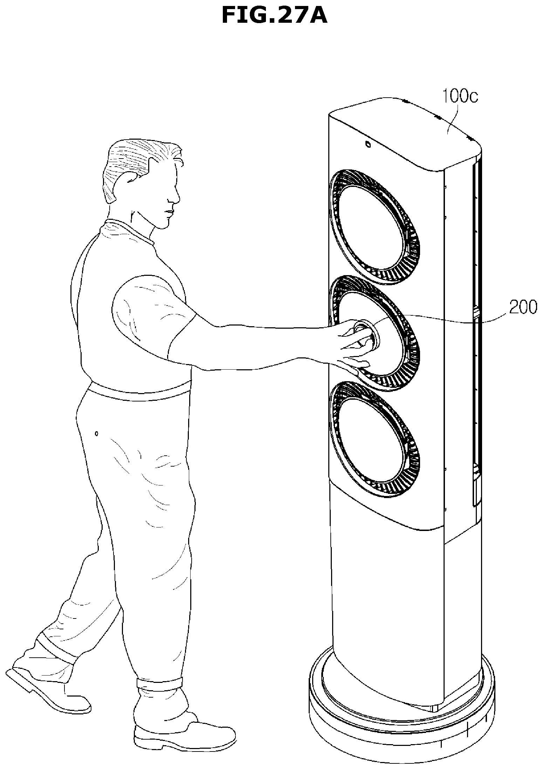

Hereinafter, a method of using a home appliance control system will be described with reference to FIGS. 27A to 28C.

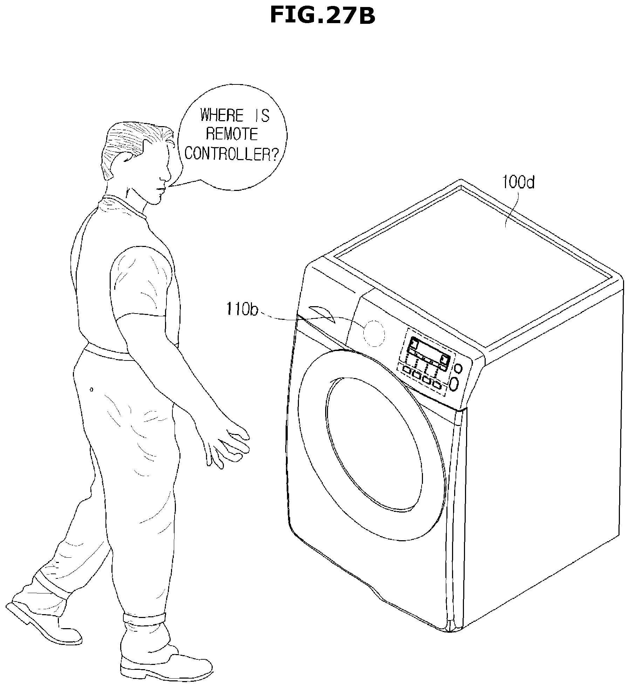

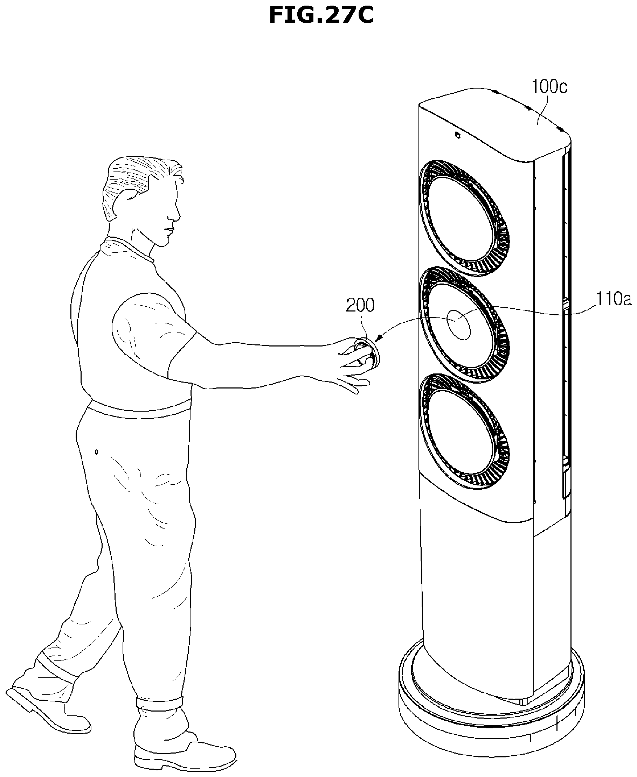

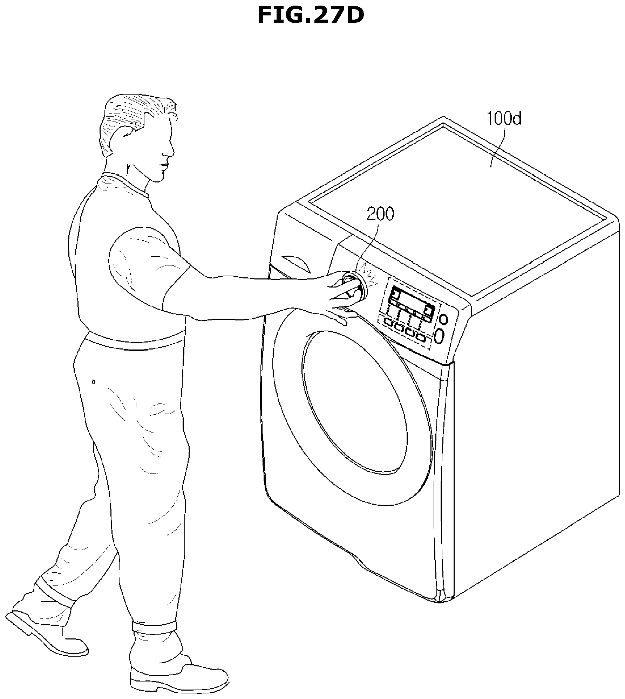

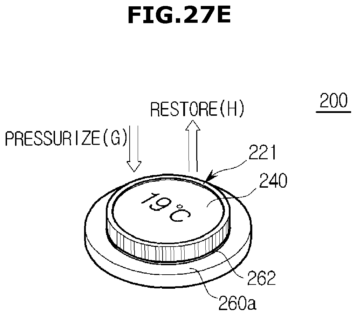

FIGS. 27A to 27E are diagrams for describing a method of controlling different home appliances 100c and 100d using one controller 200 as an embodiment of a method of using a home appliance control system. As illustrated in FIG. 27A, the user attaches and mounts the controller 200 to an air conditioner 100c, and then changes set values of various set targets such as a cooling temperature of the air conditioner 100c to control the air conditioner 100c. As illustrated in FIG. 27B, when the user wants to control a washing machine 100d different from the air conditioner 100c, but the user does not know where a remote controller of the washing machine 100d or the like is or how to manipulate an input button of the washing machine 100d, the user may detach the controller 200 mounted on the air conditioner 100c from a controller mounting part 110a of the air conditioner 100c as illustrated in FIG. 27C. The user may mount the controller 200 detached from the air conditioner 100c to a controller mounting part 110b of the washing machine 100d as illustrated in FIG. 27D, and manipulate the controller 200 to control the washing machine 100d as illustrated in FIG. 27E.

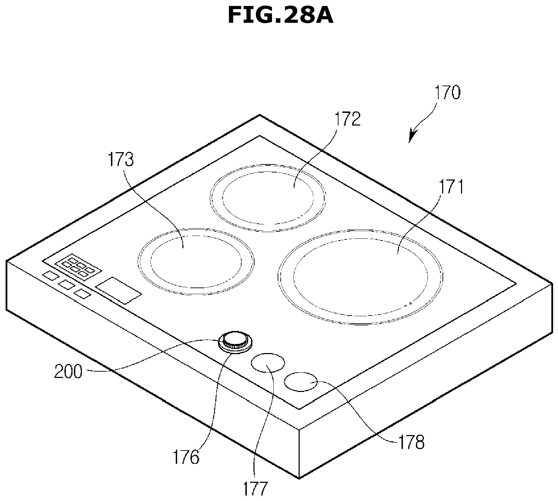

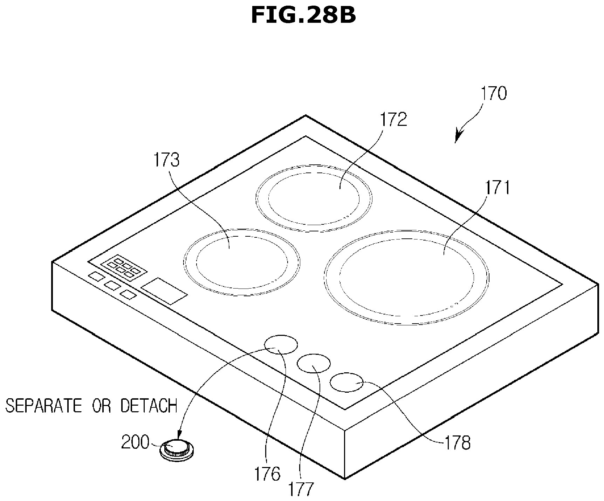

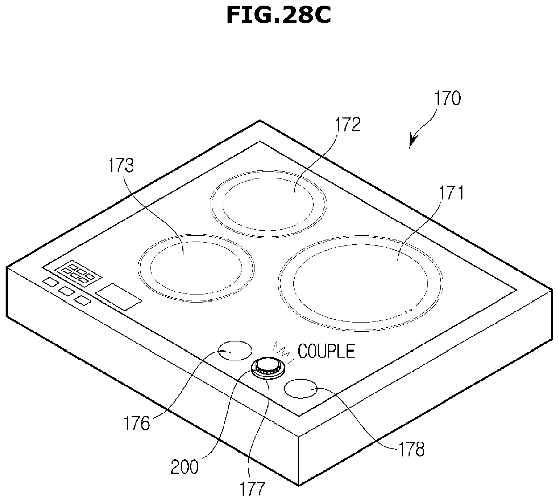

FIGS. 28A to 28C are diagrams for describing a method of controlling different driving parts 171 to 173 of the same home appliance 170 using one controller 200 as an embodiment of a method of using a home appliance control system. As illustrated in FIG. 28A, the home appliance 100, for example, the electric range 170 may include a plurality of coupling parts 176 to 178 corresponding to a plurality of driving parts, that is, a plurality of cooktops 171 to 173. The user may attach and mount the controller 200 to the controller mounting part 176 of the electric range 170 and then may control the first cooktop 171 corresponding to the controller mounting part 176. When the user wants to control the second cooktop 172 different from the first cooktop 171, the user separates the controller 200 mounted on the controller mounting part 176 as illustrated in FIG. 28B, and couples the separated controller 200 to the coupling part 177 corresponding to the second cooktop 172 as illustrated in FIG. 28C. Then, the user may manipulate the controller 200 mounted on the coupling part 177 to control the second cooktop 172 corresponding to the coupling part 177.

Thus, the user may simply and easily control the plurality of home appliances 100c and 100d or the plurality of driving parts 171 to 173 of the same home appliance 170 using one controller 200.

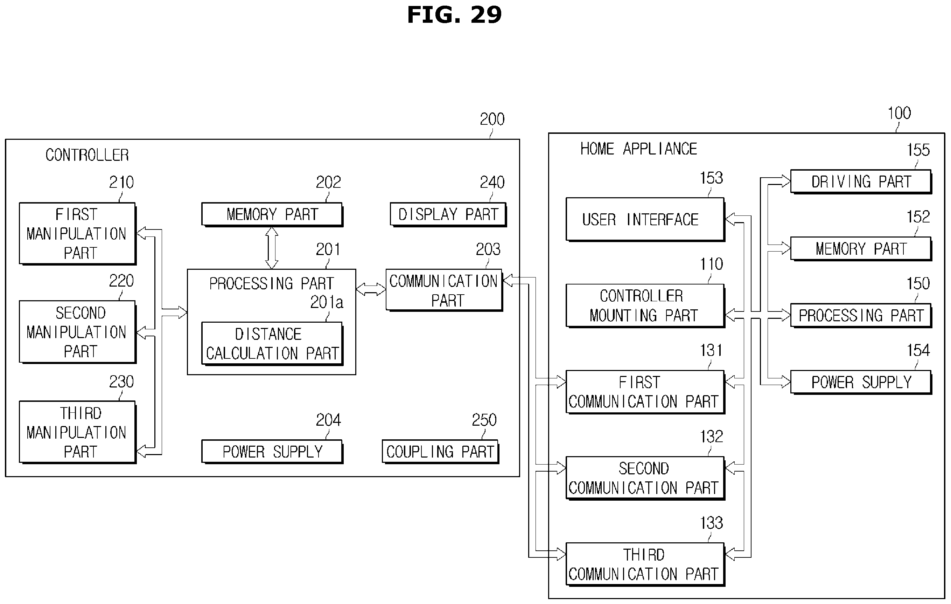

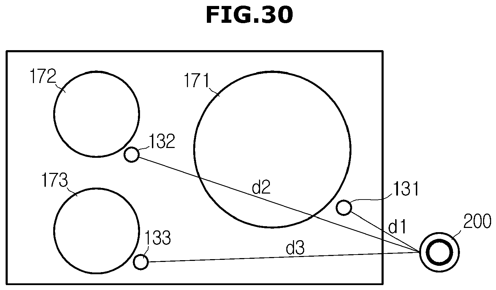

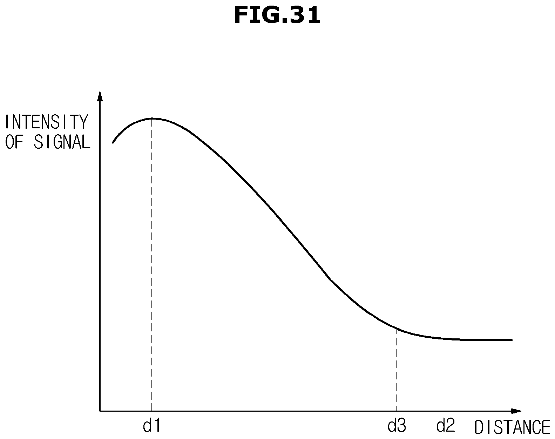

Hereinafter, a second embodiment of a home appliance, a controller, and a home appliance control system including the home appliance and the controller will be described with reference to FIGS. 29 to 31. FIG. 29 is a block diagram for describing the second embodiment of the home appliance and the controller. FIGS. 30 and 31 are a plan view for describing the second embodiment of the controller.

As illustrated in FIG. 29, the controller 200 may include a plurality of manipulating parts 210 to 230, a processor 201, a memory part 202, a communication part 203, a power supply 204, a display part 240, and a coupling part 250. The plurality of manipulating parts 210 to 230, the processor 201, the memory part 202, the communication part 203, the power supply 204, the display part 240, and the coupling part 250 may be the same as the components described through FIGS. 3 to 21, respectively, or the parts partially modified each component. Hereinafter, only differences except for those described above will be described for convenience of description.

The processor 201 of the controller 200 may further include a distance calculation part 201a. The distance calculation part 201a may calculate distances between the controller 200 and one or a plurality of reference points of the home appliance 100. According to one embodiment, the reference points may be a plurality of communication parts 131 to 133 provided in the home appliance 100. In other words, the distance calculation part 201a may calculate distances d1 to d3 between the communication part 203 of the controller 200 and each of the plurality of communication parts 131 to 133 provided in the home appliance 100.

Referring to FIG. 31, the intensity of a signal between two wireless communication modules, for example, the communication part 203 of the controller 200 and the first communication part 131 of the home appliance 100 may decrease as a distance between the two wireless communication modules increases. Therefore, the distance d1 between the two wireless communication modules may be determined according to the intensity of the signal. The processor 201 may calculate the distances d1 to d3 between the communication part 203 of the controller 200 and each of the plurality of communication parts 131 to 133 mounted on the home appliance 100 based on the intensity of the signal.

When the distances d1 to d3 between the communication part 203 of the controller 200 and each of the plurality of communication parts 131 to 133 provided in the home appliance 100 are calculated, the processor 201 may select one or more distances of the calculated distances and determine the communication parts 131 to 133 of the home appliance 100 corresponding to the selected distance. Here, the processor 201 may select the first communication part 131 corresponding to the smallest distance d1 of the calculated distances and establish a session with the first communication part 131. When the session between the communication part 203 of the controller 200 and the first communication part 131 is established, the processor 201 of the controller 200 may transmit a notification signal related to the session establishment to the home appliance 100 as required, receive information about the home appliance 100 including information about the first driving part 171 corresponding to the first communication part 131 from the home appliance 100, and authenticate the home appliance 100 based on the received information. In addition, the processor 201 may transmit the electrical signal generated in the first to third manipulating parts 210 to 230 or the control signal generated according to the electrical signal to the home appliance 100 according to the manipulation of the user to control the first driving part 171 corresponding to the first communication part 131. In this case, the communication between the controller 200 and the home appliance 100 may be performed through the communication part 203 of the controller 200 and the first communication part 131 or through different communication parts 132 and 133.

The home appliance 100 may include a controller mounting part 110, first to third communication parts 131 to 133, a processor 150, a memory part 152, a user interface 153, a power supply 154, and a driving part 155. The controller mounting part 110, the processor 150, the memory part 152, the user interface 153, the power supply 154, and the driving part 155 may be the same as the components described through FIGS. 22 to 24, respectively, or the parts partially modified each component.

The first to third communication parts 131 to 133 may communicate with the communication part 203 of the controller 200 using a wireless communication method. Here, the wireless communication method may include all wireless communication method which may change the intensity of the signal according to a distance between the communication modules which communicate with each other. The first to third communication parts 131 to 133 may be installed around the plurality of corresponding driving parts 171 to 173, respectively. Since the driving part for controlling the operation among the plurality of driving parts 171 to 173, for example, the first driving part 171 is controlled according to approaching of the controller 200, the user may intuitively select and control the driving part to be controlled, for example, the first driving part 171. The first to third communication parts 131 to 133 may use the same communication module or different communication modules.

The processor 150 may receive the electrical signals output from the first to third communication parts 131 to 133, and determine whether a target to be communicated such as the controller 200 is present or not or the intensity of the received signal, or the like based on the received electrical signals. The processor 150 may also calculate the distances d1 to d3 between the communication part 203 of the controller 200 and each of the communication parts 131 to 133 provided in the home appliance 100 in the same manner as the processor 201 of the controller 200. The processor 150 may select the first communication part 131 corresponding to the smallest distance d1 of the calculated distances, and establish a session between the first communication part 131 and the communication part 203 of the controller 200. When the session between the communication part 203 of the controller 200 and the first communication part 131 is established, the processor 150 may transmit a notification signal to the controller 200 as required, receive information about the controller 200, and authenticate the controller 200 based on the received information. Further, the processor 150 may also transmit information about the home appliance 100 including information about the first driving part 171 corresponding to the first communication part 131 selected by the controller 200. When the electrical signals or the control signal generated in the first to third manipulating parts 210 to 230 are transmitted to the home appliance 100 according to the manipulation of the user, the processor 150 may generate a driving signal for controlling the first driving part 171 corresponding to the first communication part 131 selected according to the electrical signals or the control signal, and transmit the generated driving signal to the first driving part 171. The first driving part 171 located to be close to the controller 200 may be controlled according to the generated driving signal.

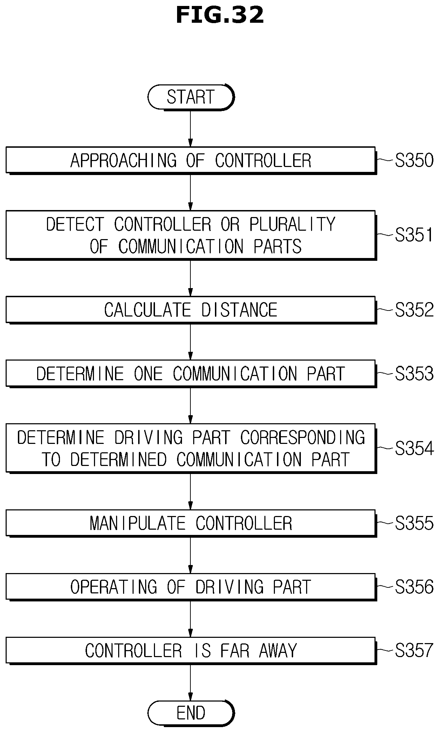

Hereinafter, a second embodiment of a method of controlling a home appliance will be described with reference to FIG. 32. FIG. 32 is a flowchart illustrating the second embodiment of the method of controlling the home appliance through a controller.

According to the second embodiment of the method of controlling the home appliance, first, the controller 200 approaches to the home appliance 100 as illustrated in FIG. 32 (S350). When the controller 200 approaches, the processor 201 of the controller 200 may search around whether different communication parts 131 to 133 to be communicated are present or not through the communication part 203.

When one or the plurality of communication parts 131 to 133 to be communicated are detected around (S351), the processor 201 of the controller 200 may calculate the distances d1 to d3 between each of the communication parts 131 to 133 and the controller 200 using the intensity of the signal (S352), and determine any one communication part, for example, the first communication part 131 based on the calculated result (S353). Here, the determined first communication part 131 may be the communication part of which the distance is the smallest among the distances d1 to d3 between each of the communication parts 131 to 133 and the controller 200. In some embodiments, the home appliance 100 may detect the approaching of the controller 200, calculate the distances d1 to d3 between each of the communication parts 131 to 133 and the controller 200, and then determine the first communication part 131.

When the first communication part 131 is determined, a session between the first communication part 131 and the communication part 203 of the controller 200 is established, and start to communicate between the first communication part 131 and the communication part 203 of the controller 200. As required, the authentication of the home appliance 100 or the controller 200 may be accompanied. In addition, when the first communication part 131 is determined, the first driving part 171 corresponding to the first communication part 131 may be determined by the processor 201 of the controller 200 or the processor 150 of the home appliance 100 (S354).

When the user manipulates at least one of the first to third manipulating parts 210 to 230 of the controller 200 (S355), the processor 201 of the controller 200 may generate a control command, and the processor 150 of the home appliance 100 may generate a driving signal for controlling the first driving part 171 according to the manipulation of the user. The first driving part 171 may operate according to the generated driving signal.

When the controller 200 is far away by a predetermined distance or more or a different communication part closer to the controller 200 is present, the session between the first communication part 131 and the communication part 203 of the controller 200 may be terminated. When the session ends, the controller 200 may stop the control of the first driving part 171 corresponding to the first communication part 131. Therefore, the user may not control the first driving part 171 using the controller 200. When a different communication part closer to the controller 200 than the first communication part 131 is detected, the user may control the driving part corresponding to the closer different communication part.

## Claims

1. A home appliance comprising:
at least one controller mounting part on which a controller is selectively mounted; and
a processor configured to be connected to the controller to be communicated when the controller is mounted on the controller mounting part, and to receive a control signal generated according to manipulation of the controller.

2. The home appliance according to claim 1, wherein the processor receives a mount signal from the controller when the controller is mounted on the controller mounting part.

3. The home appliance according to claim 1, wherein the processor transmits identification information about the home appliance to the controller and receives authentication information from the controller when the controller is mounted on the controller mounting part.

4. The home appliance according to claim 3, wherein the identification information about the home appliance includes at least one of a type of the home appliance, an identification number of the home appliance, a set target controllable in the home appliance, and information about an operating state of the home appliance.

5. The home appliance according to claim 1, further comprising a communication part configured to communicate with the controller using a wired communication method or a wireless communication method.

6. The home appliance according to claim 5, wherein the communication part performs communication with the controller using a wireless communication method including at least one of BluetoothTM, near field communication (NFC), ZigBeeTM, Wireless-Fidelity (Wi-Fi), Infrared Data Association (IrDA), HomeRF, and ultra wide band (UBW) communication.

7. The home appliance according to claim 1, further comprising a driving part configured to operate according to a driving signal of the processor and transmit a feedback signal according to performance of the operation to the processor.

8. The home appliance according to claim 7, wherein the processor determines a current state of the driving part based on the feedback signal, and transmits driving state information about a current driving state of the driving part to the controller.

9. The home appliance according to claim 1, further comprising:
a plurality of driving parts configured to perform the same function and a plurality of controller mounting parts corresponding to the plurality of driving parts,
wherein the processor generates a driving signal related to a first driving part corresponding to a first controller mounting part on which the controller is mounted among the plurality of controller mounting parts and transmits a control signal to the first driving part.

10. The home appliance according to claim 1, wherein the processor receives an adjustment command adjusting a set value of a controllable set target of the home appliance according to manipulation of the controller.

11. The home appliance according to claim 10, wherein the set value of the controllable set target of the home appliance includes at least one of a temperature, humidity, an amount of wind, and a driving time.

12. The home appliance according to claim 1, wherein the controller mounting part and the controller are coupled by magnetic force.

13. The home appliance according to claim 1, wherein the controller mounting part includes an insertion groove into which the controller is inserted.

14. The home appliance according to claim 1, wherein the controller mounting part includes a contact terminal configured to be in contact with the controller and receive an electrical signal generated in the controller.

15. The home appliance according to claim 14, wherein the controller mounting part is formed in a cylindrical shape, and the contact terminal is disposed on an inner peripheral surface of the cylindrical-shaped controller mounting part.

16. The home appliance according to claim 15, wherein the contact terminal includes a power source terminal configured to supply a power source to the controller and a communication terminal configured to exchange a signal with the controller.

17. The home appliance according to claim 1, wherein the controller mounting part is formed in a circular shape.

18. The home appliance according to claim 1, wherein the processor converts failure information generated in the home appliance into an error signal and transmits the error signal to the controller.

19. The home appliance according to claim 1, wherein the home appliance further includes a user interface part configured to receive a control command of a user, and is controlled through both the user interface part and the controller when the controller is mounted.

20. A home appliance control system comprising:
a controller including a manipulating part and a display; and
a home appliance on which the controller is selectively mounted and connected to the controller to be communicated when the controller is mounted,
wherein the controller transmits a control signal generated according to manipulating of the manipulating part to the home appliance, and the home appliance transmits state information in which the home appliance operates to the controller, and the state information is displayed on the display.

21. The system according to claim 20, wherein the home appliance transmits identification information of the home appliance to the controller, the controller authenticates at least one home appliance based on the identification information, and the home appliance is in a controllable state by the controller.

22. The system according to claim 20, wherein the controller transmits identification information of the controller to the home appliance, and the home appliance authenticates the controller based on the identification information, and the home appliance is in a controllable state by the controller.

23. A controller comprising:
a coupling part mounted on a part of a controlled device;
a display part configured to display state information of the controlled device
a manipulating part configured to receive a control command for controlling the controlled device; and
a communication part configured to communicate with the controlled device,
wherein a control signal corresponding to manipulation of the manipulating part is transmitted to the controlled device through the communication part when the coupling part is mounted on the part of the controlled device.

24. The controller according to claim 23, wherein the manipulating part includes at least one of an operating wheel, a jog shuttle, a manipulating button, a touch screen, and a touch pad rotatable in at least one direction.

25. The controller according to claim 23, wherein the coupling part includes at least one of an adsorber attached on an outer surface of a home appliance using a magnet and pressure of the air, an insertion projection inserted into an insertion groove of the home appliance, and a first terminal coupled to a second terminal provided in the home appliance and configured to output an electrical signal.

26. A method of controlling a home appliance, comprising:
coupling a controller having a manipulating part to a part of a home appliance;
connecting the home appliance to the controller to be communicated; and
generating a control signal by the controller according to manipulation of the manipulating part of the controller and transmitting the control signal to the home appliance.

27. The method according to claim 26, wherein the connecting of the home appliance to the controller to be communicated includes:
transmitting a notification signal to notify the coupling of the controller from the controller to the home appliance.

28. The method according to claim 26, wherein the connecting of the home appliance to the controller to be communicated includes:
transmitting identification information of the home appliance to the controller by the home appliance;
performing authentication of the home appliance in the controller based on the identification information of the home appliance;
and being in a state in which the home appliance is controlled by the controller when the authentication of the home appliance is succeeded.

29. The method according to claim 26, wherein the connecting of the home appliance to the controller to be communicated includes:
transmitting identification information of the controller to the home appliance by the controller;
performing authentication of the controller based on the identification information of the controller; and
being in a state in which the home appliance is controlled by the controller when the authentication of the controller is succeeded.

30. The method according to claim 26, wherein the connecting of the home appliance to the controller to be communicated includes:
connecting the controller to at least one home appliance in a wired communication method or a wireless communication method.

31. The method according to claim 26, further comprising:
displaying state information of the home appliance on which the controller is mounted by the controller.

32. The method according to claim 26, further comprising:
manipulating the manipulating part of the controller, and receiving an adjustment command of a set value of a controllable set target of the home appliance.

33. The method according to claim 26, further comprising:
manipulating the manipulating part of the controller, and changing a controllable set target of the home appliance.

34. The method according to claim 26, further comprising:
transmitting information about the home appliance from the home appliance to the controller.

35. A readable storage medium using a computer which stores a program for performing a method of controlling a controlled device,
wherein the method of controlling the controlled device comprising:
coupling a controller to the controlled device;
connecting the controlled device to the controller to be communicated;
manipulating the controller; and
operating the controlled device according to the manipulation of the controller.

36. A home appliance comprising:
a plurality of reference points;
a plurality of driving parts corresponding to each of the plurality of reference points; and
a processor configured to determine distances between the plurality of reference points and the controller, select at least one driving part of the plurality of driving parts according to the determined distances, and generate a control signal related to the selected driving part according to manipulation of the controller.

37. A controller comprising:
a coupling part configured to communicate with a home appliance including a plurality of driving parts;
a display part configured to display information about the home appliance attached through the coupling part;
at least one manipulating part configured to receive a control command for controlling the home appliance; and
a processor configured to determine distances from a plurality of reference points provided in the home appliance, select at least one driving part of the plurality of driving parts according to the determined distances, and generate a control signal related to the selected driving part according to manipulation of the manipulating part.

38. An electric range comprising:
a cooktop configured to generate heat;
a controller mounting part on which a controller is mounted; and
a processor connected to the controller to be communicated, configured to receive a control signal generated according to manipulation of the controller, and generate a driving signal for controlling the cooktop according to the received control signal when the controller is mounted on the controller mounting part.

39. The electric range according to claim 38, wherein the processor generates a driving signal related to the cooktop corresponding to the controller mounting part on which the controller is mounted.

40. The electric range according to claim 38, wherein the processor receives a mount signal from the controller, transmits identification information to the controller, and receives authentication information from the controller when the controller is mounted on the controller mounting part.

41. The electric range according to claim 38, further comprising a communication part corresponding to the controller mounting part,
wherein the processor determines the cooktop to be controlled according to a distance between the communication part and the controller.

42. The electric range according to claim 41, wherein the driving signal includes a temperature adjustment signal of the cooktop.

43. An air conditioner comprising:
a controller mounting part on which a controller is mounted;
an air conditioning unit configured to cool air and perform an operation for discharging the cooled air to the outside; and
a processor connected to the controller to be communicated, configured to receive a control signal generated according to manipulation of the controller and generate a driving signal for controlling the air conditioning unit according to the received control signal when the controller is mounted on the controller mounting part.

44. The air conditioner according to claim 43, wherein the control signal includes at least one of a cooling temperature, an operating time, an air discharge direction, intensity of wind, an operation reservation time, and an operating mode.

45. The air conditioner according to claim 43, further comprising an external housing in which the controller mounting part is provided.

46. The air conditioner according to claim 43, wherein the processor receives a mount signal from the controller, transmits identification information to the controller, and receives authentication information from the controller when the controller is mounted on the controller mounting part.
